# EUROPEAN PATENT APPLICATION

(11) **EP 4 852 555 A1**
(43) Date of publication of application: **09.12.2026**
(21) Application number: 25747730.7
(22) Date of filing: 23.01.2025
(51) Int. Cl.: H04W 72/04

(54) **TRANSPORT BLOCK SIZE DETERMINATION METHOD AND COMMUNICATION APPARATUS**

(30) Priority: 31.01.2024 CN 202410138229
(71) Applicant: Beijing Unisoc Communications Technology Co., Ltd., Beijing 100083 (CN)
(72) Inventor: ZHANG, Shuai, Beijing 100083 (CN)
(74) Representative: Patentanwälte Ruff, Wilhelm, Beier, Dauster & Partner mbB
(86) International application number: PCT/CN2025/074145
(87) International publication number: WO 2025/162160

(57) **Abstract**

Disclosed in the embodiments of the present application are a transport block size determination method and a communication apparatus, which can effectively determine a transport block size and improve the communication quality of a sub-band full-duplex communication scenario. The method may comprise: receiving resource scheduling information, wherein the resource scheduling information is used for configuring uplink or downlink transmission resources, and the transmission resources comprise sub-band full-duplex time units and non-sub-band full-duplex time units in a time domain; and determining a transport block size on the basis of the number of transmission resources within the sub-band full-duplex time units and/or the number of transmission resources within the non-sub-band full duplex time units. Therefore, when transmission resources configured at a network side comprise sub-band full-duplex time units in a time domain, a transport block size can be effectively determined, thereby improving the communication quality of a sub-band full-duplex communication scenario.

## Description

The present application claims priority to CN Patent Application No. 202410138229.5, entitled "TRANSPORT BLOCK SIZE DETERMINATION METHOD AND COMMUNICATION APPARATUS", and filed with the China National Intellectual Property Administration on January 31, 2024, the entirety of which is incorporated herein by reference.

### TECHNICAL FIELD

The present application relates to the technical field of communication, and particularly to a method for determining a transport block size and a communication apparatus.

### BACKGROUND

A transport block refers to an "information block" for data transfer between Medium Access Control (MAC) layer and Physical (PHY) layer. For communication, a terminal device needs to determine a transport block size. For example, before attempting to decode data, the terminal device needs to determine the Transport Block Size (TBS) received on Physical Downlink Shared Channel (PDSCH).

In a Time Division Duplex (TDD) system, transmission directions of frequency domain resources corresponding to each time unit are the same, either uplink or downlink, enabling all the frequency domain resources corresponding to each time unit to be used for either uplink transmission or downlink transmission. The terminal device may determine the TBS based on scheduled transmission resources configured by a network device. However, in TDD time domain configuration, a number of time units for downlink transmission is much higher than that of time units for uplink transmission. To meet the demand for enhanced uplink capacity, a solution of Subband Full Duplex (SBFD) on network side is proposed. This involves the network side dividing a single carrier into an uplink subband and a downlink subband that does not overlap with each other in frequency domain, enabling the network side to perform uplink reception and downlink transmission in corresponding uplink subband and downlink subband of a same time unit, respectively, to achieve full duplex on the network side. Here, the time unit may be referred to as an SBFD time unit. In a single scheduling, the network side may perform resource scheduling in an SBFD time unit, or may perform resource scheduling in an SBFD time unit and a non-Subband Full Duplex (non-SBFD) time unit. In case where transmission resources configured by network side include an SBFD time unit in time domain, further research is needed to effectively determine the transport block size to ensure communication quality in an SBFD scenario.

### SUMMARY

Embodiments of the present application provide a method for determining a transport block size and a communication apparatus, which, in case where transmission resources configured by network side include a subband full duplex time unit in time domain, may effectively determine the transport block size and improve communication quality in subband full duplex communication scenarios.

In a first aspect, embodiments of the present application provide a method for determining a transport block size. The method may be performed by a terminal device, or by an apparatus configured for use with a terminal device, such as a processor, a chip, or a chip module and the like. The method may include: receiving resource scheduling information, wherein the resource scheduling information is used to configure uplink or downlink transmission resources, wherein the transmission resources include a subband full duplex time unit and a non-subband full duplex time unit in time domain; a transport block size is determined based on a number of resources of the transmission resources in the subband full duplex time unit and/or a number of resources of the transmission resources in the non-subband full duplex time unit; wherein, a number of resources in the subband full duplex time unit of the uplink transmission resources includes a number of frequency domain resources of the uplink transmission resources that overlap with an uplink subband corresponding to the subband full duplex time unit, or a number of resources in the subband full duplex time unit of the downlink transmission resources includes a number of frequency domain resources of the downlink transmission resources that overlap with a downlink subband corresponding to the subband full duplex time unit.

Here, the terminal device receives the resource scheduling information from a network device, which facilitates determining the transport block size based on the number of resources of the transmission resources configured by the resource scheduling information in the subband full duplex time unit and/or in the non-subband full duplex time unit. The number of resources in the subband full duplex time unit for determining the transport block size includes the number of frequency domain resources of the uplink transmission resources that overlap with the uplink subband, or the number of frequency domain resources of the downlink transmission resources that overlap with the downlink subband. The overlapping frequency domain resources are those that may be used for uplink or downlink, ensuring that the transport block size may be effectively applied to resource scheduling across the subband full duplex time unit and the non-subband full duplex time unit, thereby enhancing communication quality in subband full duplex communication scenarios.

In one possible implementation, the number of resources in the subband full duplex time unit of the uplink transmission resources further includes: a number of time domain symbols in the subband full duplex time unit of the uplink transmission resources; or, the number of resources in the subband full duplex time unit of the downlink transmission resources further includes: a number of time domain symbols in the subband full duplex time unit of the downlink transmission resources. That is to say, the transport block size for uplink is determined based on the number of time domain symbols in the subband full duplex time unit of the uplink transmission resources and the number of frequency domain resources of the uplink transmission resources that overlap with the uplink subband, or the transport block size for downlink is determined based on the number of time domain symbols in the subband full duplex time unit of the downlink transmission resources and the number of frequency domain resources of the downlink transmission resources that overlap with the downlink subband, ensuring that the transport block size may adapt to slot allocation ratio for uplink and downlink for the subband full duplex and the resource configuration of the network device, thereby enhancing the communication quality in subband full duplex communication scenarios.

In a possible implementation, the number of resources of the transmission resources in the non-subband full duplex time unit comprises: a number of corresponding frequency domain resources of the transmission resources in the non-subband full duplex time unit and a number of time domain symbols of the transmission resources in the non-subband full duplex time unit. That is to say, the transport block size may also be determined based on the number of time-frequency resources of the transmission resources in the non-subband full duplex time unit, to accommodate resource scheduling across the subband full duplex time unit and the non-subband full duplex time unit, thereby enhancing the communication quality in subband full duplex communication scenarios.

In a possible implementation, the transport block size being determined based on the number of resources of the transmission resources in the subband full duplex time unit and/or the number of resources of the transmission resources in the non-subband full duplex time unit, comprises: in response to a first time unit in the transmission resources being a subband full duplex time unit, the transport block size is determined based on the number of resources of the transmission resources in the subband full duplex time unit; or, in response to a first time unit in the transmission resources being a non-subband full duplex time unit, the transport block size is determined based on the number of resources of the transmission resources in the non-subband full duplex time unit; or, in response to a last time unit in the transmission resources being a subband full duplex time unit, the transport block size is determined based on the number of resources of the transmission resources in the subband full duplex time unit; or, in response to a last time unit in the transmission resources being a non-subband full duplex time unit, determining the transport block size based on the number of resources of the transmission resources in the non-subband full duplex time unit. That is, the transport block size may be determined based on the number of resources in the subband full duplex time unit or in the non-subband full duplex time unit, according to the subband full duplex type of the first or last time unit in the transmission resources configured by the network device.

In a possible implementation, the transport block size being determined based on the number of resources of the transmission resources in the subband full duplex time unit and/or the number of resources of the transmission resources in the non-subband full duplex time unit, comprises: based on a configuration indicated by first configuration information or indication of a first default value, the transport block size is determined according to the number of resources of the transmission resources in the subband full duplex time unit or the number of resources of the transmission resources in the non-subband full duplex time unit. Optionally, the first configuration information or the first default value is sent to the terminal device by the network device, or predefined on the terminal device. The type of the number of resources used to determine the transport block size may be conveniently determined based on the configuration indicated by the first configuration information or the indication of the first default value.

In a possible implementation, the transport block size being determined based on the number of resources of the transmission resources in the subband full duplex time unit and/or the number of resources of the transmission resources in the non-subband full duplex time unit, comprises: in response to a number of time units occupied by the subband full duplex time unit being greater than a number of time units occupied by the non-subband full duplex time unit in the transmission resources, the transport block size is determined based on the number of resources of the transmission resources in the subband full duplex time unit; or, in response to a number of time units occupied by the non-subband full duplex time unit being greater than a number of time units occupied by the subband full duplex time unit in the transmission resources, the transport block size is determined based on the number of resources of the transmission resources in the non-subband full duplex time unit. That is to say, the transport block size may be determined based on the number of resources in the time unit for which type has a greater occupation percentage in the transmission resources.

In a possible implementation, the transmission resources are used for repetition, and the transport block size is applied to both a transmission occasion corresponding to the subband full duplex time unit and a transmission occasion corresponding to the non-subband full duplex time unit. The network device configures the transmission resources for repetition, and the transport block size determined by the terminal device may be applied to both the subband full duplex time unit and the non-subband full duplex time unit.

In a possible implementation, the transport block is transmitted on multiple slots; the transport block size being determined based on the number of resources of the transmission resources in the subband full duplex time unit and/or the number of resources of the transmission resources in the non-subband full duplex time unit, comprises: the transport block size is determined based on the number of resources of the transmission resources in the subband full duplex time unit and first indication information, the first indication information is carried by the resource scheduling information, and the first indication information is used to indicate a number of slots occupied by the transport block; or, the transport block size is determined based on the number of resources of the transmission resources in the non-subband full duplex time unit and first indication information; or, the transport block size is determined based on the number of resources of the transmission resources in the subband full duplex time unit and the number of resources of the transmission resources in the non-subband full duplex time unit. That is to say, in case where a mechanism for processing a transport block across multiple slots is supported, the transport block size may be determined based on the number of resources of the transmission resources in the subband full duplex time unit and first indication information, or the number of resources of the transmission resources in the non-subband full duplex time unit and first indication information, or the number of resources of the transmission resources in the subband full duplex time unit and the number of resources in the non-subband full duplex time unit.

In a second aspect, embodiments of the present application provide a method for determining a transport block size. The method may be performed by a terminal device, or by an apparatus configured for use with a terminal device, such as a processor, a chip, or a chip module and the like. The method may comprise: receiving resource scheduling information, wherein the resource scheduling information is used to configure uplink or downlink transmission resources, and the transmission resources comprise a subband full duplex time unit in time domain; wherein the transport block size for uplink is determined based on a number of frequency domain resources of the uplink transmission resources that overlap with an uplink subband corresponding to the subband full duplex time unit, or the transport block size for downlink is determined based on a number of frequency domain resources of the downlink transmission resources that overlap with a downlink subband corresponding to the subband full duplex time unit.

The terminal device receives the resource scheduling information from a network device, which facilitates determining the transport block size based on the number of resources of the transmission resources configured by the resource scheduling information in the subband full duplex time unit. The transport block size for uplink is determined based on the number of frequency domain resources of the uplink transmission resources that overlap with the uplink subband corresponding to the subband full duplex time unit, or the transport block size for downlink is determined based on the number of frequency domain resources of the downlink transmission resources that overlap with the downlink subband corresponding to the subband full duplex time unit, ensuring that the transport block size may be effectively applied to resource scheduling in the subband full duplex time unit, thereby enhancing communication quality in subband full duplex communication scenarios.

In a possible implementation, the transport block size for downlink being determined based on the number of frequency domain resources of the downlink transmission resources that overlap with the downlink subband corresponding to the subband full duplex time unit, comprises: the transport block size for downlink is determined based on a number of a portion of the frequency domain resources of the transmission resources that overlap with the downlink subband; wherein the portion of frequency domain resources are determined based on second configuration information, predefined information, or a second default value. For example, for the case where the terminal device cannot support non-continuous downlink transmissions on resources corresponding to the subband full duplex time unit that overlap with the uplink subband, a portion of frequency domain resources of one subband from the aforementioned overlapping frequency domain resources may be selected based on the second configuration information, the predefined information, or the second default value to determine the transport block size. Optionally, the second configuration information or the second default value is sent to the terminal device by the network device, or predefined on the terminal device.

In a third aspect, embodiments of the present application provide a method for determining a transport block size. The method may be performed by a network device, or by an apparatus configured for use with a network device, such as a processor, a chip, or a chip module and the like. The method may include: sending resource scheduling information, wherein the resource scheduling information is used to configure uplink or downlink transmission resources, wherein the transmission resources include a subband full duplex time unit and a non-subband full duplex time unit in time domain; wherein the transport block size is determined based on a number of resources of the transmission resources in the subband full duplex time unit and/or a number of resources of the transmission resources in the non-subband full duplex time unit; wherein, the number of resources of the uplink transmission resources in the subband full duplex time unit includes a number of frequency domain resources of the uplink transmission resources that overlap with an uplink subband corresponding to the subband full duplex time unit, or the number of resources of the downlink transmission resources in the subband full duplex time unit includes a number of frequency domain resources of the downlink transmission resources that overlap with a downlink subband corresponding to the subband full duplex time unit.

The network device sends the resource scheduling information to the terminal device, which facilitates the terminal device to determine the transport block size based on the number of resources of the transmission resources configured by the resource scheduling information in the subband full duplex time unit and/or in the non-subband full duplex time unit. The number of resources in the subband full duplex time unit for determining the transport block size includes the number of frequency domain resources of the uplink transmission resources that overlap with the uplink subband, or the number of frequency domain resources of the downlink transmission resources that overlap with the downlink subband. The overlapping frequency domain resources are those that may be used for uplink or downlink, ensuring that the transport block size may be effectively applied to resource scheduling across the subband full duplex time unit and the non-subband full duplex time unit, thereby enhancing communication quality in subband full duplex communication scenarios.

In a possible implementation, the number of resources of the uplink transmission resources in the subband full duplex time unit further includes: a number of time domain symbols of the uplink transmission resources in the subband full duplex time unit; or, the number of resources of the downlink transmission resources in the subband full duplex time unit further includes: a number of time domain symbols of the downlink transmission resources in the subband full duplex time unit. That is to say, the transport block size for uplink is determined based on the number of time domain symbols of the uplink transmission resources in the subband full duplex time unit and the number of frequency domain resources of the uplink transmission resources that overlap with the uplink subband, or the transport block size for downlink is determined based on the number of time domain symbols of the downlink transmission resources in the subband full duplex time unit and the number of frequency domain resources of the downlink transmission resources that overlap with the downlink subband, ensuring that the transport block size may adapt to slot allocation ratio for uplink and downlink for subband full duplex and the resource configuration of the network device, thereby enhancing the communication quality in subband full duplex communication scenarios.

In a possible implementation, the number of resources of the transmission resources in the non-subband full duplex time unit comprises: a number of corresponding frequency domain resources of the transmission resources in the non-subband full duplex time unit and a number of time domain symbols of the transmission resources in the non-subband full duplex time unit. That is to say, the transport block size may also be determined based on the number of time-frequency resources of the transmission resources in the non-subband full duplex time unit, to accommodate resource scheduling across the subband full duplex time unit and the non-subband full duplex time unit, thereby enhancing the communication quality in subband full duplex communication scenarios.

In a possible implementation, the transport block size being determined based on the number of resources of the transmission resources in the subband full duplex time unit and/or the number of resources of the transmission resources in the non-subband full duplex time unit, comprises: in response to a first time unit in the transmission resources being a subband full duplex time unit, the transport block size is determined based on the number of resources of the transmission resources in the subband full duplex time unit; or, in response to a first time unit in the transmission resources being a non-subband full duplex time unit, the transport block size is determined based on the number of resources of the transmission resources in the non-subband full duplex time unit; or, in response to a last time unit in the transmission resources being a subband full duplex time unit, the transport block size is determined based on the number of resources of the transmission resources in the subband full duplex time unit; or, in response to a last time unit in the transmission resources being a non-subband full duplex time unit, the transport block size is determined based on the number of resources of the transmission resources in the non-subband full duplex time unit. That is, the transport block size may be determined based on the number of resources in the subband full duplex time unit or in the non-subband full duplex time unit, according to the subband full duplex type of the first or last time unit in the transmission resources configured by the network device.

In a possible implementation, the transport block size being determined based on the number of resources of the transmission resources in the subband full duplex time unit and/or the number of resources of the transmission resources in the non-subband full duplex time unit, comprises: based on configuration indicated by first configuration information or indication of a first default value, the transport block size is determined according to the number of resources of the transmission resources in the subband full duplex time unit or the number of resources of the transmission resources in the non-subband full duplex time unit. Optionally, the first configuration information or the first default value is sent to the terminal device by the network device, or predefined on the terminal device. The type of the number of resources used to determine the transport block size may be conveniently determined based on the configuration indicated by the first configuration information or the indication of the first default value.

In a possible implementation, the transport block size being determined based on the number of resources of the transmission resources in the subband full duplex time unit and/or the number of resources of the transmission resources in the non-subband full duplex time unit, comprises: in response to a number of time units occupied by the subband full duplex time unit being greater than a number of time units occupied by the non-subband full duplex time unit in the transmission resources, the transport block size is determined based on the number of resources of the transmission resources in the subband full duplex time unit; or, in response to a number of time units occupied by the non-subband full duplex time unit being greater than a number of time units occupied by the subband full duplex time unit in the transmission resources, the transport block size is determined based on the number of resources of the transmission resources in the non-subband full duplex time unit. That is to say, the transport block size may be determined based on the number of resources in the time unit for which type has a greater occupation percentage in the transmission resources.

In a possible implementation, the transmission resources are used for repetition, and the transport block size is applied to both a transmission occasion corresponding to the subband full duplex time unit and a transmission occasion corresponding to the non-subband full duplex time unit. The network device configures the transmission resources for repetition, and the transport block size determined by the terminal device may be applied to both the subband full duplex time unit and the non-subband full duplex time unit.

In a possible implementation, the transport block is transmitted on multiple slots; the transport block size being determined based on the number of resources of the transmission resources in the subband full duplex time unit and/or the number of resources of the transmission resources in the non-subband full duplex time unit, comprises: the transport block size is determined based on the number of resources of the transmission resources in the subband full duplex time unit and first indication information, the first indication information is carried by the resource scheduling information, and the first indication information is used to indicate a number of slots occupied by the transport block; or, the transport block size is determined based on the number of resources of the transmission resources in the non-subband full duplex time unit and first indication information; or, the transport block size is determined based on the number of resources of the transmission resources in the subband full duplex time unit and the number of resources of the transmission resources in the non-subband full duplex time unit. That is to say, in case where a mechanism for processing a transport block across multiple slots is supported, the transport block size may be determined based on the number of resources of the transmission resources in the subband full duplex time unit and the first indication information, or the number of resources of the transmission resources in the non-subband full duplex time unit and the first indication information, or the number of resources of the transmission resources in the subband full duplex time unit and the number of resources in the non-subband full duplex time unit.

In a fourth aspect, embodiments of the present application provide a method for determining a transport block size. The method may be performed by a network device, or by an apparatus configured for use with a network device, such as a processor, a chip, or a chip module and the like. The method may comprise: sending resource scheduling information, wherein the resource scheduling information is used to configure uplink or downlink transmission resources, and the transmission resources comprise a subband full duplex time unit in time domain; wherein the transport block size for uplink is determined based on a number of frequency domain resources of the uplink transmission resources that overlap with an uplink subband corresponding to the subband full duplex time unit, or the transport block size for downlink is determined based on a number of frequency domain resources of the downlink transmission resources that overlap with a downlink subband corresponding to the subband full duplex time unit.

The network device sends the resource scheduling information to a terminal device, which facilitates the terminal device to determine the transport block size based on the number of resources of the transmission resources configured by the resource scheduling information in the subband full duplex time unit. The transport block size for uplink is determined based on the number of frequency domain resources of the uplink transmission resources that overlap with the uplink subband corresponding to the subband full duplex time unit, or the transport block size for downlink is determined based on the number of frequency domain resources of the downlink transmission resources that overlap with the downlink subband corresponding to the subband full duplex time unit, ensuring that the transport block size may be effectively applied to resource scheduling in the subband full duplex time unit, thereby enhancing communication quality in subband full duplex communication scenarios.

In a possible implementation, the transport block size for downlink being determined based on the number of frequency domain resources of the downlink transmission resources that overlap with the downlink subband corresponding to the subband full duplex time unit, comprises: the transport block size for downlink is determined based on a number of a portion of frequency domain resources of the downlink transmission resources that overlap with the downlink subband; wherein the portion of frequency domain resources are determined based on second configuration information, predefined information, or a second default value. For example, in case where the terminal device cannot support non-continuous downlink transmissions on resources corresponding to the subband full duplex time unit that span the uplink subband, a portion of frequency domain resources of one subband from the aforementioned overlapping frequency domain resources may be selected based on the second configuration information, the predefined information, or the second default value to determine the transport block size. Optionally, the second configuration information or the second default value is sent to the terminal device by the network device, or predefined on the terminal device.

In a fifth aspect, embodiments of the present application provide a communication apparatus. The communication apparatus comprises:
a communication unit configured to: receive resource scheduling information, wherein the resource scheduling information is used to configure uplink or downlink transmission resources, wherein the transmission resources include a subband full duplex time unit and a non-subband full duplex time unit in time domain; a transport block size is determined based on a number of resources of the transmission resources in the subband full duplex time unit and/or a number of resources of the transmission resources in the non-subband full duplex time unit; wherein, the number of resources of the uplink transmission resources in the subband full duplex time unit includes a number of frequency domain resources of the uplink transmission resources that overlap with an uplink subband corresponding to the subband full duplex time unit, or the number of resources of the downlink transmission resources in the subband full duplex time unit includes a number of frequency domain resources of the downlink transmission resources that overlap with a downlink subband corresponding to the subband full duplex time unit.

Or, the communication apparatus comprises:
a communication unit configured to: receive resource scheduling information, wherein the resource scheduling information is used to configure uplink or downlink transmission resources, and the transmission resources comprise a subband full duplex time unit in time domain; a transport block size for uplink is determined based on a number of frequency domain resources of the uplink transmission resources that overlap with an uplink subband corresponding to the subband full duplex time unit, or a transport block size for downlink is determined based on a number of frequency domain resources of the downlink transmission resources that overlap with a downlink subband corresponding to the subband full duplex time unit.

Or, the communication apparatus comprises:
a communication unit configured to: send resource scheduling information, wherein the resource scheduling information is used to configure uplink or downlink transmission resources, wherein the transmission resources include a subband full duplex time unit and a non-subband full duplex time unit in time domain; wherein a transport block size is determined based on a number of resources of the transmission resources in the subband full duplex time unit and/or a number of resources of the transmission resources in the non-subband full duplex time unit; wherein, the number of resources of the uplink transmission resources in the subband full duplex time unit includes a number of frequency domain resources of the uplink transmission resources that overlap with an uplink subband corresponding to the subband full duplex time unit, or the number of resources of the downlink transmission resources in the subband full duplex time unit includes a number of frequency domain resources of the downlink transmission resources that overlap with a downlink subband corresponding to the subband full duplex time unit.

Or, the communication apparatus comprises:
a communication unit configured to: send resource scheduling information, wherein the resource scheduling information is used to configure uplink or downlink transmission resources, and the transmission resources comprise a subband full duplex time unit in time domain; wherein a transport block size for uplink is determined based on a number of frequency domain resources of the uplink transmission resources that overlap with an uplink subband corresponding to the subband full duplex time unit, or a transport block size for downlink is determined based on a number of frequency domain resources of the downlink transmission resources that overlap with a downlink subband corresponding to the subband full duplex time unit.

In a sixth aspect, embodiments of the present application provide a communication apparatus comprising a processor, a memory, and computer programs or instructions stored on the memory, wherein the processor executes the computer programs or instructions to implement steps of the method involved in the first, second, third, or fourth aspect described above.

In a seventh aspect, embodiments of the present application provide a chip comprising a processor, wherein the processor performs steps of the method according to the first aspect, or performs steps of the method according to the second aspect, or performs steps of the method according to the third aspect, or performs steps of the method according to the fourth aspect.

In an eighth aspect, embodiments of the present application provide a chip module comprising a communication interface and a chip, wherein the chip comprises a processor, and wherein the processor performs steps of the method according to the first aspect, or performs steps of the method according to the second aspect, or performs steps of the method according to the third aspect, or performs steps of the method according to the fourth aspect.

In a ninth aspect, embodiments of the present application provide a computer-readable storage medium having computer programs or instructions stored thereon, wherein the computer programs or instructions, when executed, implement steps of the method involved in the first aspect mentioned above, or implement steps of the method involved in the second aspect mentioned above, or implement steps of the method involved in the third aspect mentioned above, or implement steps of the method involved in the fourth aspect mentioned above.

In a tenth aspect, embodiments of the present application provide a computer program product comprising computer programs or instructions, wherein the computer programs or instructions, when executed, implement steps of the method involved in the first aspect mentioned above, or implement steps of the method involved in the second aspect mentioned above, or implement steps of the method involved in the third aspect mentioned above, or implement steps of the method involved in the fourth aspect mentioned above.

In an eleventh aspect, embodiments of the present application provide a communication system, and the communication system may comprise a terminal device performing the method involved in the first aspect mentioned above, and a network device performing the method involved in the third aspect mentioned above.

In a twelfth aspect, embodiments of the present application provide a communication system, and the communication system may comprise a terminal device performing the method involved in the second aspect mentioned above, and a network device performing the method involved in the fourth aspect mentioned above.

### BRIEF DESCRIPTION OF THE DRAWINGS

FIG. 1 is a schematic diagram of a system architecture applied to embodiments of the present application;
FIG. 2 is a schematic diagram of a configuration of time-frequency resources for uplink and downlink in TDD provided in an embodiment of the present application;
FIG. 3 is a schematic diagram of another configuration of time-frequency resources for uplink and downlink in TDD provided in an embodiment of the present application;
FIG. 4 is a schematic diagram of PDSCH scheduling by a network device provided in an embodiment of the present application;
FIG. 5 is a schematic diagram of PUSCH scheduling by a network device provided in an embodiment of the present application;
FIG. 6 is a schematic diagram of another PDSCH scheduling by a network device provided in an embodiment of the present application;
FIG. 7 is a schematic diagram of another PUSCH scheduling by a network device provided in an embodiment of the present application;
FIG. 8 is a schematic flowchart of a method for determining a TBS provided in an embodiment of the present application;
FIG. 9 is a schematic flowchart of another method for determining a TBS provided in an embodiment of the present application;
FIG. 10 is a schematic diagram of another PUSCH scheduling by a network device provided in an embodiment of the present application;
FIG. 11 is a schematic diagram of another PDSCH scheduling by a network device provided in an embodiment of the present application;
FIG. 12 is a schematic structural diagram of a communication apparatus provided in an embodiment of the present application;
FIG. 13 is a schematic structural diagram of another communication apparatus provided in an embodiment of the present application;
FIG. 14 is a schematic structural diagram of a chip module provided in an embodiment of the present application.

### DETAILED DESCRIPTION

In the present application, terms such as "first", "second", "third" and "fourth" are used to distinguish between identical items or similar items that have substantially the same functionality and effect. Those skilled in the art will understand that terms such as "first", "second", "third" and "fourth" do not pose limitation on the quantity and order of execution, and also do not limit that they are different. The term "and/or" describes a relationship between related objects, indicating that three types of relationships may exist. For example, A and/or B may indicate: A alone, both A and B, or B alone. The character "/" generally indicates an "or" relation between the two objects before and after the character.

It should be understood that in the present application, "at least one of" refers to one or more, and "a plurality of" refers to two or more. Furthermore, the term "equal to" in the present application may be used together with the terms "greater than" or "less than". When "equal to" is used with "greater than", the technical solution of "greater than" is adopted; when "equal to" is used with "less than", the technical solution of "less than" is adopted.

In the embodiments of the present application, the terms "of", "corresponding", "relevant", "related", "associated", and "mapped" may sometimes be used interchangeably. It should be pointed out that when the distinction is not emphasized, the concept or meaning to be expressed is consistent.

Firstly, the system architecture related to the present application is illustrated.

The present application may be applied to a fifth-generation (5G) system, also known as a new radio (NR) system; or to a sixth-generation (6G) system, or a seventh-generation (7G) system, or other future communication systems; or may further be used in a device-to-device (D2D) system, a machine-to-machine (M2M) system, a vehicle-to-everything (V2X) system, and the like.

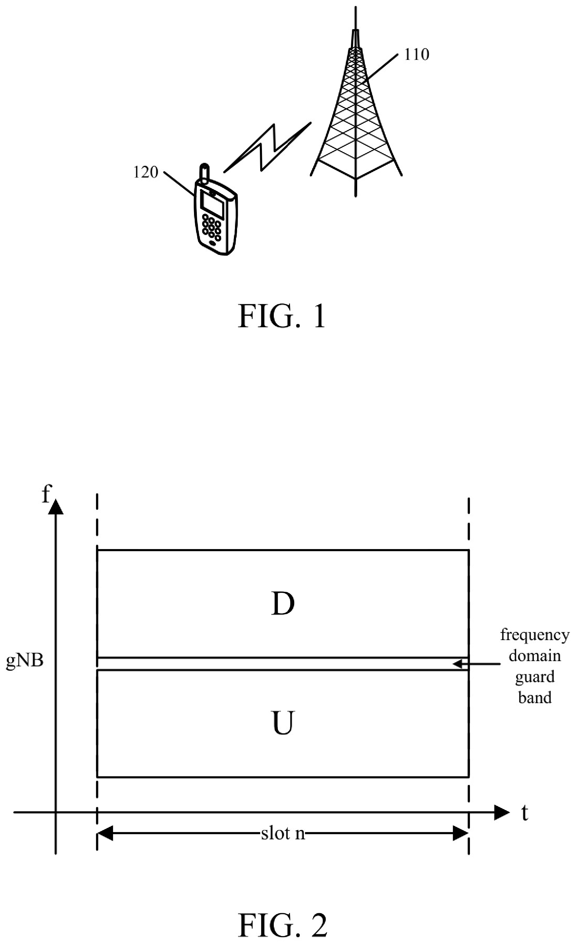

The present application may be applied to the system architecture shown in FIG. 1. The system architecture depicted in FIG. 1 may include, but is not limited to: a network device 110 and a terminal device 120. The quantity and form of devices in FIG. 1 are for illustration purposes only and do not constitute limitations on embodiments of the present application. For example, FIG. 1 shows one network device and one terminal device as an example, but in practical applications, it may also include more network devices and/or more terminal devices.

The network device 110 is a device that provides wireless communication functions for the terminal device. The network device may include, but is not limited to, satellites and/or radio access network (RAN) devices. The network device may support at least one wireless communication technology, such as Wideband Code Division Multiple Access (WCDMA), Long Term Evolution (LTE), NR, 6G, etc. For example, the network device includes but is not limited to: a next-generation Node B (gNB) in 5G, an evolved Node B (eNB), a Radio Network Controller (RNC), a Node B (NB), a Base Station Controller (BSC), a Base Transceiver Station (BTS), a home base station (e.g., a Home evolved Node B, or a Home Node B, HNB), a Baseband Unit (BBU), a Transmission and Reception Point (TRP), a Transmission Point (TP), a Mobile Switching Center, etc. The network device may also be a wireless controller, a Centralized Unit (CU), and/or a Distributed Unit (DU) in a Cloud Radio Access Network (CRAN) scenario, or the network device may be a relay station, an access point, a vehicle-mounted device, a wearable device, an access network device in future mobile communications, or an access network device in a future evolved Public Land Mobile Network (PLMN), etc. In some embodiments, the network device may also be an apparatus with the functionality of providing wireless communication for terminals device, such as a chip module.

The terminal device 120 is a device with wireless transceiver functionality, which may be referred as a terminal, a User Equipment (UE), a Mobile Station (MS), a Mobile Terminal (MT), an access terminal device, an Internet of Things terminal device, a vehicle-mounted terminal device, an industrial control terminal device, a UE unit, a UE station, a mobile station, a remote station, a remote terminal device, a mobile device, a wireless communication device, a UE agent, or a UE apparatus, etc. The terminal device may be fixed or mobile. It should be noted that the terminal device may support at least one wireless communication technology, such as WCDMA, LTE, NR, 6G, or next-generation wireless communication technology. For example, the terminal device may be a mobile phone, a pad, a desktop computer, a laptop, an all-in-one computer, a vehicle-mounted terminal, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a Session Initiation Protocol (SIP) phone, a Wireless Local Loop (WLL) station, a personal digital assistant (PDA), a handheld device with wireless communication functionality, a computing device, or another processing device connected to a wireless modem, a wearable device, a terminal device in a future mobile communication network, or a terminal device in a future evolved PLMN, etc. In some embodiments of the present application, the terminal device may also be an apparatus with functionality of transceiver, such as a chip module. The chip module may include a chip and may also include other discrete devices. The embodiments of the present application do not pose limitation on the specific technology and form of device adopted by the terminal device.

In an embodiment of the present application, the network device 110 sends resource scheduling information to the terminal device 120. Correspondingly, the terminal device 120 receives the resource scheduling information from the network device 110, determines a Transport Block Size (TBS) based on a number of resources of transmission resources configured by the resource scheduling information, and performs communication based on TBS.

It should be understood that the system architecture described in the embodiments of the present application is to illustrate the technical solutions of the embodiments of the present application more clearly and does not constitute a limitation on the technical solutions provided by the embodiments of the present application. Those skilled in the art will know that as the system architecture evolves and new service scenarios emerge, the technical solutions provided by the embodiments of the present application are equally applicable to similar technical problems.

Secondly, related concepts involved in embodiments of the present application are illustrated.

### 1. Subband Full Duplex (SBFD) time unit and non-Subband Full Duplex (non-SBFD) time unit

In a Time Division Duplex (TDD) system, transmission directions of frequency domain resources corresponding to each time unit are the same, either uplink or downlink, enabling the frequency domain resources corresponding to each time unit to be effectively used for either uplink transmission or downlink transmission, that is, for transmission in one direction. However, in TDD time domain configuration, the number of time units for downlink transmission is much higher than that of time units for uplink transmission. To meet the demand for enhanced uplink capacity, a solution of SBFD on network side is proposed. This involves the network side dividing a single carrier into an uplink subband and a downlink subband that does not overlap with each other in frequency domain, enabling the network side to perform uplink reception and downlink transmission in corresponding uplink subband and downlink subband of the same time unit, respectively, to achieve full duplex on the network side. Here, the time unit may be referred to as an SBFD time unit. For terminal side, it is still supported that in a single time unit, only uplink transmission in the uplink subband or downlink reception in the downlink subband could be performed. Optionally, the time unit may be a symbol, a slot, or a subframe, and accordingly, the SBFD time unit may be referred to as an SBFD symbol, an SBFD slot, or an SBFD subframe. Herein, the time unit is exemplified as a slot for illustration. Referring to FIG. 2, which is a schematic diagram of a configuration of time-frequency resources for uplink and downlink in TDD provided in an embodiment of the present application. In FIG. 2, the horizontal axis represents time domain, denoted by t, and the vertical axis represents frequency domain, denoted by f. The carrier corresponding to slot n is divided by a gNB into an uplink subband and a downlink subband, with U representing the uplink subband and D representing the downlink subband. That is, slot n is an SBFD time unit.

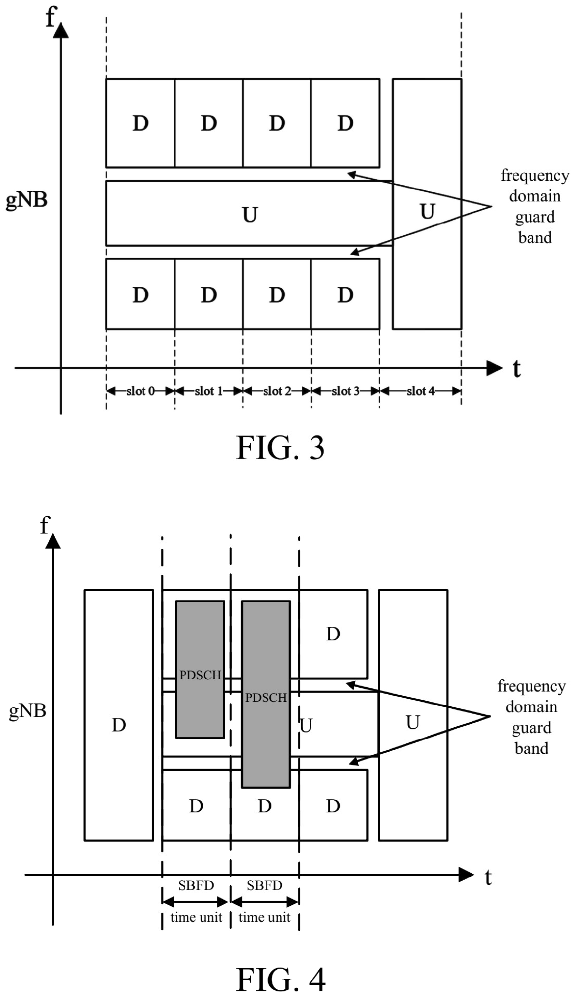

Correspondingly, in the case that the frequency domain resources corresponding to one time unit may only support transmission in one direction, i.e., there is no uplink subband in this time unit, such a time unit may be referred to as a non-SBFD time unit. Optionally, a non-SBFD time unit may also be referred to as a non-SBFD symbol, a non-SBFD slot, or a non-SBFD subframe. Referring to FIG. 3, which is a schematic diagram of another configuration of time-frequency resources for uplink and downlink in TDD provided in an embodiment of the present application. In FIG. 3, the horizontal axis represents time domain, denoted by t, and the vertical axis represents frequency domain, denoted by f. The carriers corresponding to slots 0-3 comprise both uplink subbands and downlink subbands, i.e., slots 0-3 are SBFD time units. The frequency domain resources corresponding to slot 4 may only be used for uplink transmission, i.e., slot 4 is a non-SBFD time unit. In the frequency domain resources corresponding to a non-SBFD time unit, U indicates that all frequency domain resources corresponding to this time unit may only be used for uplink transmission. In the frequency domain resources corresponding to an SBFD time unit, D indicates the downlink subband, and U indicates the uplink subband.

Optionally, in FIGs. 2 and 3, a frequency domain guard band may also be configured between the uplink subband and the downlink subband. The frequency domain guard band is set to suppress the inter-subband cross-link interference from the downlink subband to the uplink subband, and is not used for uplink transmission or downlink transmission.

### 2. Transport Block (TB) and Transport Block Size (TBS)

TB refers to an "information block" for data transfer between Medium Access Control (MAC) layer and Physical (PHY) layer. TBS, also known as Transport Block Size, denotes the size of this "information block", which may, for instance, represent the number of information contained within this "information block", i.e., the number of information bits.

For communication, a terminal device needs to determine the transport block size. For example, before attempting to decode data, the terminal device needs to determine the Transport Block Size (TBS) received on Physical Downlink Shared Channel (PDSCH) or Physical Uplink Shared Channel (PUSCH). Initially, the terminal device determines the number of Resource Elements (RE) *N*'*_{RE}* allocated for PDSCH or PUSCH within a Physical Resource Block (PRB) in a single slot using formula (1). $N {′}_{RE} = {N}_{sc}^{RB} ⋅ {N}_{symb}^{sh} - {N}_{DMRS}^{PRB} - {N}_{oh}^{PRB}$ (1)

Here, *Nₛ^{R}_{c}^{B}* represents the number of subcarriers in a PRB and equals to 12; *Nₛ^{s}_{y}^{h}_{mb}* represents the number of time domain symbols allocated for PDSCH or PUSCH in each slot; *N_{D}^{P}_{M}^{RB}_{RS}* represents the number of REs of a Demodulation Reference Signal (DM-RS) of each PRB in a scheduled duration, including the overhead of DM-RS CDM groups without data; *Nₒ^{P}ₕ^{RB}* represents the overhead configured by higher layer parameter xOverhead, such as the overhead configured by a higher layer parameter xOverhead in PDSCH-ServingCellConfig or PUSCH-ServingCellConfig. The higher layer parameter xOverhead may be selected from 0, 6, 12, or 18. If the higher layer parameter xOverhead is not configured, Nₒ^{P}ₕ^{RB} may be set to 0. If PDSCH is scheduled by the Physical Downlink Control Channel (PDCCH) with CRC (Cyclic Redundancy Check) scrambled by SI-RNTI (System Information Radio Network Temporary Identifier), RA-RNTI (Radio Access Radio Network Temporary Identifier), MsgB-RNTI (Message B Radio Network Temporary Identifier), or P-RNTI (Physical Radio Network Temporary Identifier), Nₒ^{P}ₕ^{RB} may be assumed to be 0. For transmission of uplink message 3 (Msg3) , Nₒ^{P}ₕ^{RB} may be set to 0.

The terminal device determines the total number of REs N_{RE} allocated for PDSCH or PUSCH in a slot using formula (2). ${N}_{RE} = min \left(156, N{′}_{RE}\right) ⋅ {n}_{PRB}$ (2)

Here, n_{PRB} represents the total number of PRBs allocated for the terminal device.

The terminal device converts the total number of REs N_{RE} allocated for PDSCH or PUSCH into a number of non-quantized information bits *N_{info}* using formula (3). ${N}_{info} = {N}_{RE} ∗ R ∗ {Q}_{m} ∗ ν$ (3)

Here, *R* represents a target code rate, *Qₘ* represents a *modulation order,* and *v* represents the number of transmission layers.

The terminal device quantizes the number *N_{info}* of non-quantized information bits to obtain the number of information bits N'*_{info}* for PDSCH or PUSCH transmission, and then obtains TBS based on N'*_{info}* .

In the case of repetition transmission, for a terminal device configured with a higher layer parameter repetitionScheme set to "fdmSchemeB", in the case that the code point in the "Transmission Configuration Indication" field of DCI indicates two Transmission Configuration Indication (TCI) states and the "Antenna Port" field of the DCI indicates a DM-RS in a Code Division Multiplexing (CDM) group, *N_{RE}* is determined based on the number of allocated PRBs corresponding to the first TCI (i.e., in formula *N_{RE}* =min(DI,*N*'*_{RE}*)·*n_{PRB}*, *n_{PRB}* represents the number of allocated PRBs corresponding to the first TCI state), the determined TBS for PDSCH or PUSCH transmission occasions related to the first TCI state is also applicable to PDSCH or PUSCH transmission occasions related to a second TCI state.

In the case of repetition transmission, for a terminal device configured with a higher layer parameter "repetitionScheme" set to "tdmSchemeA", in the case that the code point in the "Transmission Configuration Indication" field of DCI indicates two TCI states and the "Antenna Port" field of the DCI indicates a DM-RS in a CDM group, N'_{RE} is determined based on the number of allocated symbols for PDSCH or PUSCH in a slot corresponding to the first TCI state (i.e., in formula $N {′}_{RE} = {N}_{sc}^{RB} ⋅ {N}_{symb}^{sh} - {N}_{DMRS}^{PRB} - {N}_{oh}^{PRB} , {N}_{symb}^{sh}$ represents the number of allocated symbols for PDSCH in a slot corresponding to the first TCI state), the determined TBS for PDSCH or PUSCH transmission occasions related to the first TCI state is also applicable to PDSCH or PUSCH transmission occasions related to the second TCI state.

For TB processing over multi-slot (TBoMS), the total number of REs *N_{RE}* allocated for PUSCH is determined using formula (4). ${N}_{RE} = N ∗ min \left(156,N{′}_{RE}\right) ⋅ {n}_{PRB}$ (4)

Here, N represents the number of slots occupied by the transport block, indicated by a parameter numberOfSlotsTBoMS.

The formula mentioned above for determining TBS includes the number of time domain symbols Nₛ^{s}_{y}^{h}_{mb} in each slot and the total number of PRBs n_{PRB} configured for the terminal device .

In a Time Division Duplex (TDD) system, the frequency domain resources of a TDD carrier must be the same in the transmission direction within a same time unit, i.e., either uplink or downlink. Thus, the uplink resources configured by network side for a terminal device in a single scheduling may be effectively used for uplink transmission, and the downlink resources configured may be effectively used for downlink transmission. In other words, the number of time domain symbols in each slot and the total number of PRBs configured by network side for the terminal device are the numbers of scheduling resources Nₛ^{s}_{y}^{h}_{mb} and n_{PRB} for determining TBS.

After proposing the SBFD solution, there are two situations regarding a resource scheduling configured by a network device for a terminal device.

Situation 1: The scheduled PDSCH resource overlaps with an uplink subband and a frequency domain guard band of the resource corresponding to an SBFD time unit, or the scheduled PUSCH resource overlaps with a downlink subband and a frequency domain guard band of the resource corresponding to an SBFD time unit.

Referring to FIG. 4, which is a schematic diagram of PDSCH scheduling by a network device provided in an embodiment of the present application. As shown in FIG. 4, the PDSCH configured by the network device for a terminal device overlaps with an uplink subband and a frequency domain guard band corresponding to an SBFD time unit. In the frequency domain resources corresponding to the SBFD time unit, D represents a downlink subband, U represents the uplink subband, and the frequency domain interval between the downlink subband and the uplink subband is the frequency domain guard band.

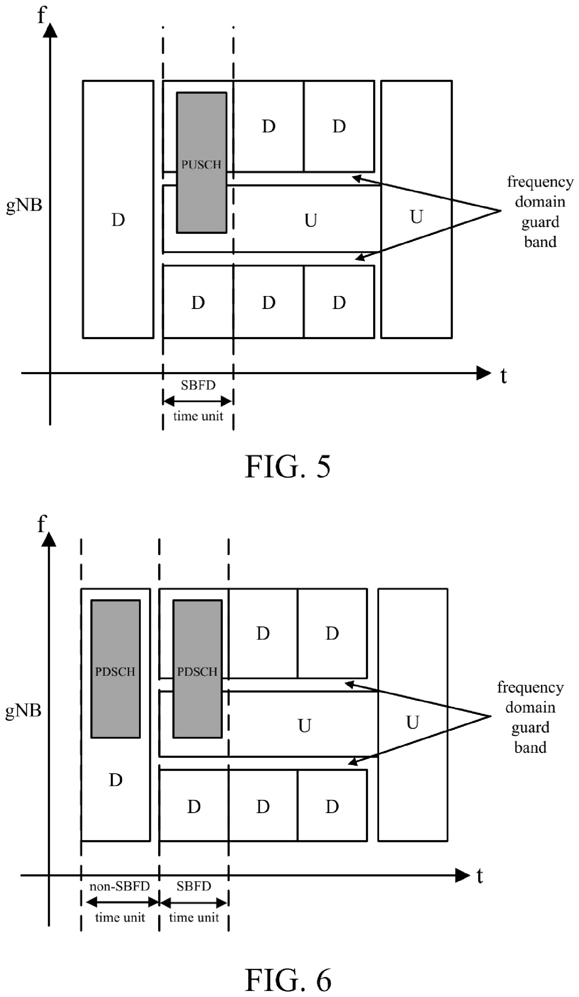

Referring to FIG. 5, which is a schematic diagram of PUSCH scheduling by a network device provided in an embodiment of the present application. As shown in FIG. 5, the PUSCH configured by the network device for a terminal device overlaps with a downlink subband and a frequency domain guard band corresponding to an SBFD time unit. In the frequency domain resources corresponding to the SBFD time unit, D represents the downlink subband, U represents an uplink subband, and the frequency domain interval between the downlink subband and the uplink subband is the frequency domain guard band.

Situation 2: The scheduled PDSCH is transmitted in an SBFD time unit and a non-SBFD time unit, or the scheduled PUSCH is transmitted in an SBFD time unit and a non-SBFD time unit.

Referring to FIG. 6, which is a schematic diagram of another PDSCH scheduling by a network device provided in an embodiment of the present application. As shown in FIG. 6, the PDSCH configured by the network device for a terminal device is transmitted in an SBFD time unit and a non-SBFD time unit. In frequency domain resources corresponding to the non-SBFD time unit, D represents that all frequency domain resources corresponding to this time unit may only be used for downlink transmission, and U represents that all frequency domain resources of this time unit may only be used for uplink transmission. In frequency domain resources corresponding to the SBFD time unit, D represents a downlink subband, and U represents an uplink subband.

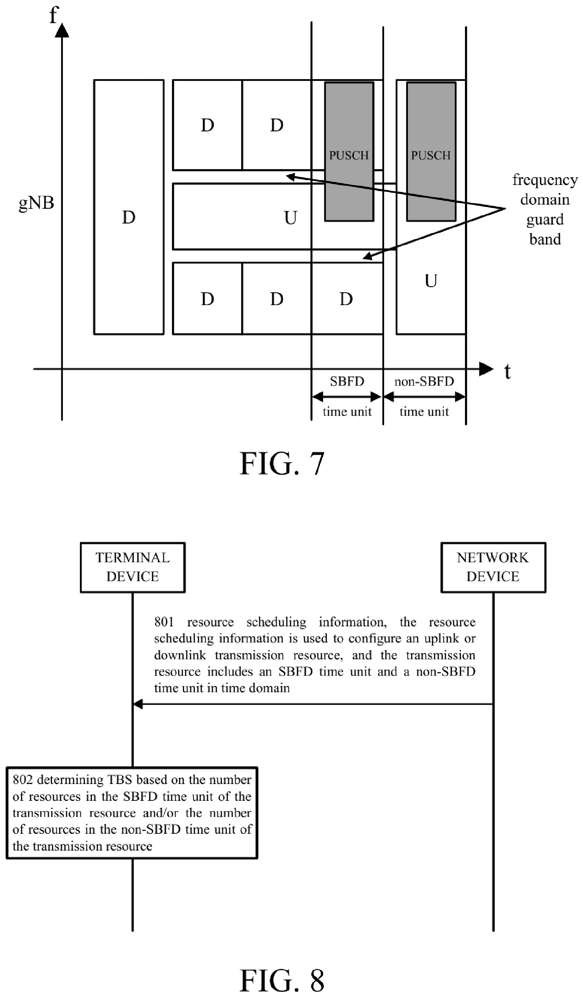

Referring to FIG. 7, which is a schematic diagram of another PUSCH scheduling by a network device provided in an embodiment of the present application. As shown in FIG. 7, the PUSCH configured by the network device for a terminal device is transmitted in an SBFD time unit and a non-SBFD time unit. In frequency domain resources corresponding to the non-SBFD time unit, D represents that all frequency domain resources corresponding to this time unit may only be used for downlink transmission, and U represents that all frequency domain resources corresponding to this time unit may only be used for uplink transmission. In frequency domain resources corresponding to the SBFD time unit, D represents a downlink subband, and U represents an uplink subband.

In situation 2, for repetition and TBoMS, it is necessary to calculate TBS applicable to the transmission occasion corresponding to the SBFD time unit and the transmission occasion corresponding to the non-SBFD time unit.

In situation 1 and situation 2, due to the potential overlapping with the uplink subband and the frequency domain guard band, not all scheduled PDSCH resources may be effectively utilized for downlink transmission. Similarly, due to potential overlapping with the downlink subband and the frequency domain guard band, not all scheduled PUSCH may be utilized for uplink transmission. It is not feasible to directly apply the number of resources allocated by the network device for uplink transmission or downlink transmission of the terminal device to the aforementioned formula for effective calculation of TBS. In the case where transmission resources configured by the network device include an SBFD time unit in time domain, further research is needed to effectively determine the transport block size to ensure communication quality in SBFD scenario.

In view of this, a method of determining a TBS is proposed. This method may effectively determine the transport block size for the case where the transmission resources configured by network side include an SBFD time unit in time domain, thereby enhancing communication quality in subband full duplex communication scenarios.

Based on the system architecture shown in FIG. 1, the method of determining resources provided in embodiments of the present application will be detailed below. The embodiments of the present application may be performed by a terminal device and a network device. Alternatively, the embodiments of the present application may be performed by an apparatus configured for use with a terminal device, such as a processor, a chip, or a chip module, as well as an apparatus configured for use with a network device, such as a processor, a chip, or a chip module. The following explanation is provided with a terminal device and a network devices as examples.

Referring to FIG. 8, FIG.8 is a schematic flowchart of a method of determining a TBS provided in an embodiment of the present application. The method may include but is not limited to the following steps.

**801**, A network device sends resource scheduling information to a terminal device, wherein the resource scheduling information is used to configure uplink or downlink transmission resources, and the transmission resources include an SBFD time unit and a non-SBFD time unit in time domain. Correspondingly, the terminal device receives the resource scheduling information from the network device.

Optionally, in the case of dynamic resource scheduling, the resource scheduling information may be carried in a scheduling DCI. In the case of semi-static resource scheduling, the resource scheduling information may be carried in a higher layer signaling, such as in a Radio Resource Control (RRC) signaling. The resource scheduling information may also be carried in corresponding control information or signaling according to another resource scheduling approach, which is not limited in this context.

Optionally, the uplink transmission resources may be PUSCH, and the downlink transmission resources may be PDSCH.

Optionally, the method may further comprise the following step.

**802**, The terminal device determines TBS based on a number of resources of the transmission resources in the SBFD time unit and/or a number of resources of the transmission resources in the non-SBFD time unit.

The terminal device may determine the TBS by the following approaches.

**Approach 1:** The terminal device determines the TBS based on the number of resources of the transmission resources in the SBFD time unit.

**Approach 2:** The terminal device determines the TBS based on the number of resources of the trasnsmission resource in the non-SBFD time unit.

**Approach 3:** The terminal device determines the TBS based on the number of resources of the transmission resources in the SBFD time unit and the number of resources of the transmission resources in the non-SBFD time unit.

For Approach 1 and Approach 3, the number of resources used to determine the TBS includes the number of resources of the transmission resources in the SBFD time unit. In the case that the resource scheduling information configures uplink transmission resources, the number of resources of the transmission resources in the SBFD time unit includes: a number of frequency domain resources of the uplink transmission resources that overlap with an uplink subband corresponding to the SBFD time unit. Optionally, the number of resources of the transmission resources in the SBFD time unit also includes: a number of time domain symbols of the uplink transmission resources in the SBFD time unit. Optionally, the number of frequency domain resources of the uplink transmission resources that overlap with the uplink subband corresponding to the SBFD time unit may refer to: the number of frequency domain resources of the uplink transmission resources that overlap with the uplink subband corresponding to one SBFD time unit; the number of time domain symbols of the uplink transmission resources in the SBFD time unit may refer to: the number of symbols of the uplink transmission resources in one SBFD time unit.

In the case that the resource scheduling information configures downlink transmission resources, the number of resources of the transmission resources in the SBFD time unit includes: a number of frequency domain resources of the downlink transmission resources that overlap with a downlink subband corresponding to the SBFD time unit. Optionally, the number of resources of the transmission resources in the SBFD time unit also includes: a number of time domain symbols of the downlink transmission resources in the SBFD time unit. Optionally, the number of frequency domain resources of the downlink transmission resources that overlap with the downlink subband corresponding to the SBFD time unit may refer to: the number of frequency domain resources of the downlink transmission resources that overlap with the downlink subband corresponding to one SBFD time unit; the number of time domain symbols of the downlink transmission resources in the SBFD time unit may refer to: the number of symbols of the downlink transmission resources in one SBFD time unit.

For Approach 2 and Approach 3, the number of resources used to determine the TBS includes the number of resources of the transmission resources in the non-SBFD time unit. In the case that the resource scheduling information configures uplink or downlink transmission resources, the number of resources of the transmission resources in the non-SBFD time unit includes: a number of corresponding frequency domain resources of the transmission resources in the non-SBFD time unit and a number of time domain symbols of the transmission resources in the non-SBFD time unit. Optionally, the number of corresponding frequency domain resources of the transmission resources in the non-SBFD time unit may refer to: the number of corresponding frequency domain resources of the transmission resources in one non-SBFD time unit; the number of time domain symbols of the transmission resources in the non-SBFD time unit may refer to: the number of time domain symbols of the transmission resources in one non-SBFD time unit.

Here, the number of frequency domain resources refers to the number of PRBs.

The terminal device may determine whether to adopt Approach 1 or Approach 2 mentioned above to determine the TBS using the following modes.

Mode 1: In response to the type of a first or a last time unit in the transmission resources configured by the resource scheduling information, the terminal device determines the TBS using Approach 1 or Approach 2 mentioned above.

Optionally, in response to the first time unit in the transmission resources being an SBFD time unit, the terminal device determines the TBS based on the number of resources of the transmission resources in the SBFD duplex time unit. That is, the TBS is determined using Approach 1 mentioned above.

Optionally, in response to the first time unit in the transmission resources being a non-SBFD time unit, the terminal device determines the TBS based on the number of resources of the transmission resources in the non-SBFD duplex time unit. That is, the TBS is determined using Approach 2 mentioned above.

Optionally, in response to the last time unit in the transmission resources being an SBFD time unit, the terminal device determines the TBS based on the number of resources of the transmission resources in the SBFD time unit. That is, the TBS is determined using Approach 1 mentioned above.

Optionally, in response to the last time unit in the transmission resources being a non-SBFD duplex time unit, the terminal device determines the TBS based on the number of resources of the transmission resources in the non-SBFD duplex time unit. That is, the TBS is determined using Approach 2 mentioned above.

Mode 2: Based on configuration indicated by first configuration information or indication of a first default value, the terminal device determines the TBS according to the number of resources of the transmission resources in the SBFD time unit or the number of resources of the transmission resources in the non-SBFD time unit.

Optionally, the first configuration information or the first default value is sent to the terminal device by the network device, or predefined on the terminal device.

For example, the first configuration information includes a bit of information. If the bit of information is set to 1, it configures or indicates that the TBS is determined based on the number of resources in the SBFD time unit; if it is set to 0, it configures or indicates that the TBS is determined based on the number of resources in the non-SBFD time unit. The values 0 and 1 can also exchange their indications or configurations. As another example, if the first default value is 1, it indicates that the TBS is determined based on the number of resources in the SBFD time unit; if it is 0, it indicates that the TBS is determined based on the number of resources in the non-SBFD time unit. The values 0 and 1 can also exchange their indications.

Mode 3: Based on the type of the time unit that occupy a greater percentage of the transmission resources in time, the terminal device determines the TBS based on the number of resources of the transmission resources in the SBFD time unit or the number of resources of the transmission resources in the non-SBFD time unit. Here, the type of a time unit includes an SBFD time unit and a non-SBFD time unit.

Optionally, in response to the number of time units occupied by the SBFD time unit being greater than the number of time units occupied by the non-SBFD time unit in the transmission resources, the terminal device determines the TBS based on the number of resources of the transmission resources in the SBFD time unit. For example, if the transmission resources include 10 time units, with 6 SBFD time units and 4 non-SBFD time units, and thus, the number of time units occupied by the SBFD time unit is greater than the number of time units occupied by the non-SBFD time unit, the TBS is determined based on the number of resources of the transmission resources in the SBFD time unit.

Optionally, in response to the number of time units occupied by the non-SBFD time unit being greater than the number of time units occupied by the SBFD time unit in the transmission resources, the terminal device determines the TBS based on the number of resources of the transmission resources in the non-SBFD time unit. For example, if the transmission resources include 10 time units, with 4 SBFD time units and 6 non-SBFD time units, and thus, the number of time units occupied by the non-SBFD time unit is greater than the number of time units occupied by the SBFD time unit, the TBS is determined based on the number of resources of the transmission resources in the non-SBFD time unit.

Mode **4:** The terminal device randomly chooses the number of resources of the transmission resources in the SBFD time unit or the number of resources of the transmission resources in the non-SBFD time unit to determine the TBS.

The transmission resources configured by the resource scheduling information including an SBFD time unit and a non-SBFD time unit in time domain, refers to the resources currently scheduled by the network device spanning both an SBFD time unit and a non-SBFD time unit, falling within the aforementioned situation 1 and situation 2. Specifically, the resources currently scheduled by the network device spanning both an SBFD time unit and a non-SBFD time unit involves the following two scenarios.

**Scenario 1**: The transmission resources configured by the resource scheduling information is used for repetition. The repetition includes uplink repetition or downlink repetition. TBS determined according to Approach 1, Approach 2 and Approach 3 may be applied to a transmission occasion corresponding to the SBFD time unit and a transmission occasion corresponding to the non-SBFD time unit.

Optionally, the TBS is determined using Approach 1. For example, if it is determined according to any mode of mode 1 to mode 4 that the TBS should be determined using Approach 1, the number of symbols of the uplink transmission resources in the SBFD time unit may be substituted into formula (1) as Nₛ^{s}_{y}^{h}_{mb} , and the number of PRBs in frequency domain resources of the uplink transmission resources that overlap with the uplink subband corresponding to the SBFD time unit may be substituted into formula (2) as n_{PRB}, to calculate the TBS for uplink. As another example, the number of symbols of the downlink transmission resources in the SBFD time unit may be substituted into formula (1) as Nₛ^{s}_{y}^{h}_{mb}, and the number of PRBs in the frequency domain resources of the downlink transmission resources that overlap with the downlink subband corresponding to the SBFD time unit may be substituted into formula (2) as n_{PRB}, to calculate the TBS for downlink. Here, the TBS determined based on the number of resources of the transmission resources in the SBFD time unit and applicable to the transmission occasion corresponding to the SBFD time unit, is also applicable to the transmission occasion corresponding to the non-SBFD time unit.

Optionally, the TBS is determined using Approach 2. For example, if it is determined according to any mode of mode 1 to mode 4 that the TBS should be determined using Approach 2, the number of symbols of the transmission resources in the non-SBFD time unit may be substituted into formula (1) as Nₛ^{s}_{y}^{h}_{mb}, and the number of PRBs of the transmission resources in the non-SBFD time unit may be substituted into formula (2) as n_{PRB}, to calculate the TBS for uplink or downlink. Here, the TBS determined based on the number of resources of the transmission resources in the non-SBFD time unit and applicable to the transmission occasion corresponding to the non-SBFD time unit, is also applicable to the transmission occasion corresponding to the SBFD time unit.

Optionally, the TBS may be determined using Approach 3. The number of symbols of the uplink transmission resources in the SBFD time unit may be substituted into formula (1) as Nₛ^{s}_{y}^{h}_{mb} , and the number of PRBs in the frequency domain resources of the uplink transmission resources that overlap with the uplink subband corresponding to the SBFD time unit may be substituted into formula (2) as n_{PRB} , to calculate the TBS for uplink corresponding to the SBFD time unit; and the number of symbols of the transmission resources in the non-SBFD time unit may be substituted into formula (1) as Nₛ^{s}_{y}^{h}_{mb}, and the number of PRBs of the transmission resources in the non-SBFD time unit may be substituted into formula (2) as n_{PRB}, to calculate the TBS for uplink corresponding to the non-SBFD time unit. Furthermore, the sum of the TBS for uplink corresponding to the SBFD time unit and the TBS for uplink corresponding to the non-SBFD time unit is averaged to obtain a TBS for uplink suitable for both the transmission occasion corresponding to the non-SBFD time unit and the transmission occasion corresponding to the SBFD time unit.

Optionally, the TBS may be determined using Approach 3. The number of symbols of the uplink transmission resources may be substituted into formula (1) as Nₛ^{s}_{y}^{h}_{mb} , and the number of PRBs in the frequency domain resources of the uplink transmission resources that overlap with the uplink subband corresponding to the SBFD time unit may be substituted into formula (2) as n_{PRB}, to calculate the TBS for uplink corresponding to the SBFD time unit; and the number of symbols of the uplink transmission resources may be substituted into formula (1) as Nₛ^{s}_{y}^{h}_{mb}, and the number of PRBs of the transmission resources in the non-SBFD time unit may be substituted into formula (2) as n_{PRB} , to calculate the TBS for uplink corresponding to the non-SBFD time unit. Furthermore, the sum of the TBS for uplink corresponding to the SBFD time unit and the TBS for uplink corresponding to the non-SBFD time unit is averaged to obtain a TBS for uplink suitable for both the transmission occasion corresponding to the non-SBFD time unit and the transmission occasion corresponding to the SBFD time unit.

Optionally, the TBS may be determined using Approach 3. The number of symbols of the downlink transmission resources in the SBFD time unit may be substituted into formula (1) as Nₛ^{s}_{y}^{h}_{mb}, and the number of PRBs in the frequency domain resources of the downlink transmission resources that overlap with the downlink subband corresponding to the SBFD time unit may be substituted into formula (2) as n_{PRB} , to calculate the TBS for downlink corresponding to the SBFD time unit; and the number of symbols of the transmission resources in the non-SBFD time unit may be substituted into formula (1) as Nₛ^{s}_{y}^{h}_{mb}, and the number of PRBs of the transmission resources in the non-SBFD time unit may be substituted into formula (2) as n_{PRB}, to calculate the TBS for downlink corresponding to the non-SBFD time unit. Furthermore, the sum of the TBS for downlink corresponding to the SBFD time unit and the TBS for downlink corresponding to the non-SBFD time unit is averaged to obtain a TBS for downlink suitable for both the transmission occasion corresponding to the non-SBFD time unit and the transmission occasion corresponding to the SBFD time unit.

Optionally, the TBS may be determined using Approach 3. The number of symbols of the downlink transmission resources in the SBFD time unit may be substituted into formula (1) as Nₛ^{s}_{y}^{h}_{mb}, and the number of PRBs in the frequency domain resources of the downlink transmission resources that overlap with the downlink subband corresponding to the SBFD time unit may be substituted into formula (2) as n_{PRB} , to calculate the TBS for downlink corresponding to the SBFD time unit; and the number of symbols of the transmission resources in the non-SBFD time unit may be substituted into formula (1) as Nₛ^{s}_{y}^{h}_{mb}, and the number of PRBs of the transmission resources in the non-SBFD time unit may be substituted into formula (2) as n_{PRB}, to calculate the TBS for downlink corresponding to the non-SBFD time unit. Furthermore, the sum of the TBS for downlink corresponding to the SBFD time unit and the TBS for downlink corresponding to the non-SBFD time unit is averaged to obtain a TBS for downlink suitable for both the transmission occasion corresponding to the non-SBFD time unit and the transmission occasion corresponding to the SBFD time unit.

Optionally, the TBS may be determined using Approach 3. The sum of the number of symbols of the uplink transmission resources in the SBFD time unit and the number of symbols of the uplink transmission resources in the non-SBFD time unit may be averaged and substituted into formula (1) as ${N}_{symb}^{sh}$; the sum of the number of PRBs in the frequency domain resources of the uplink transmission resources that overlap with the uplink subband corresponding to the SBFD time unit and the number of PRBs of the uplink transmission resources in the non-SBFD time unit is averaged and substituted into formula (2) as n_{PRB}, to calculate the TBS for uplink.

Optionally, the TBS may be determined using Approach 3. The number of symbols of the uplink transmission resources may be substituted into formula (1) as Nₛ^{s}_{y}^{h}_{mb}, and the sum of the number of PRBs in the frequency domain resources of the uplink transmission resources that overlap with the uplink subband corresponding to the SBFD time unit and the number of PRBs of the uplink transmission resources in the non-SBFD time unit is averaged and substituted into formula (2) as n_{PRB}, to calculate the TBS for uplink.

Optionally, the TBS may be determined using Approach 3. The sum of the number of symbols of the downlink transmission resources in the SBFD time unit and the number of symbols of the downlink transmission resources in the non-SBFD time unit may be averaged and substituted into formula (1) as ${N}_{symb}^{sh}$; the sum of the number of PRBs in the frequency domain resources of the downlink transmission resources that overlap with the downlink subband corresponding to the SBFD time unit and the number of PRBs of the downlink transmission resources in the non-SBFD time unit is averaged and substituted into formula (2) as n_{PRB}, to calculate the TBS for downlink.

Optionally, the TBS may be determined using Approach 3. The number of symbols of the downlink transmission resources may be substituted into formula (1) as Nₛ^{s}_{y}^{h}_{mb}, and the sum of the number of PRBs in the frequency domain resources of the downlink transmission resources that overlap with the downlink subband corresponding to the SBFD time unit and the number of PRBs of the downlink transmission resources in the non-SBFD time unit is averaged and substituted into formula (2) as n_{PRB}, to calculate the TBS for downlink.

**Scenario 2:** TB is transmitted on multiple slots, i.e., the transmission resources configured by the resource scheduling information support TBoMS.

In an implementation, the TBS is determined using Approach 1. For example, it is determined that the TBS should be determined using Approach 1 according to any mode of mode 1 to mode 4. **Approach** 1 may comprise: the terminal device determines the TBS based on the number of resources of the transmission resources in the SBFD time unit and first indication information. Here, the first indication information is carried by the resource scheduling information and is used to indicate the number of slots occupied by the transport block. For example, the first indication information is the parameter numberOfSlotsTBoMS carried by the resource scheduling information.

For example, the number of symbols of the uplink transmission resources in the SBFD time unit may be substituted into formula (1) as Nₛ^{s}_{y}^{h}_{mb}, the number of PRBs in the frequency domain resources of the uplink transmission resources that overlap with the uplink subband corresponding to the SBFD time unit and the number of slots occupied by the transport block indicated by the first indication information may be substituted into formula (4) as n_{PRB} and N, respectively, to obtain the TBS for uplink.

In another implementation, the TBS is determined using Approach 2. For example, it is determined that the TBS should be determined using Approach 2 according to any mode of mode 1 to mode 4. **Approach** 2 may comprise: the terminal device determines the TBS based on the number of resources of the transmission resources in the non-SBFD time unit and first indication information. For specific explanation of the first indication information, please refer to the aforementioned description and it will not be described here.

For example, the number of symbols of the uplink transmission resources in the non-SBFD time unit may be substituted into formula (1) as Nₛ^{s}_{y}^{h}_{mb}, the number of PRBs in the frequency domain resources of the uplink transmission resources in the non-SBFD time unit and the number of slots occupied by the transport block indicated by the first indication information may be substituted into formula (4) as n_{PRB} and N, respectively, to obtain the TBS for uplink.

In a further implementation, the TBS is determined using Approach 3. The terminal device substitutes the number of symbols of the uplink transmission resources in the SBFD time unit into formula (1) as Nₛ^{s}_{y}^{h}_{mb}, substitutes the number of PRBs in the frequency domain resources of the uplink transmission resources that overlap with the uplink subband corresponding to the SBFD time unit into formula (2) as n_{PRB}, thereby obtaining the TBS for uplink corresponding to the SBFD time unit. The terminal device substitutes the number of symbols of the transmission resources in the non-SBFD time unit into formula (1) as Nₛ^{s}_{y}^{h}_{mb}, substitutes the number of PRBs of the uplink transmission resources in the non-SBFD time unit into formula (2) as n_{PRB}, thereby obtaining the TBS for uplink corresponding to the non-SBFD time unit. The terminal device accumulates the TBS for uplink corresponding to the SBFD time unit and the TBS for uplink corresponding to the non-SBFD time unit to obtain the TBS for uplink.

Optionally, in the case that a transmission includes multiple SBFD time units and multiple non-SBFD time units in time domain, the TBS is determined using Approach 3. For each SBFD time unit, the number of symbols of the uplink transmission resources in this SBFD time unit is substituted into formula (1) as Nₛ^{s}_{y}^{h}_{mb} , and the number of PRBs in the frequency domain resources of the uplink transmission resources that overlap with the uplink subband corresponding to this SBFD time unit is substituted into formula (2) as n_{PRB} , to obtain the TBS for uplink corresponding to this SBFD time unit. For each non-SBFD time unit, the number of symbols of the transmission resources in this non-SBFD time unit is substituted into formula (1) as Nₛ^{s}_{y}^{h}_{mb}, and the number of PRBs of the uplink transmission resources in this non-SBFD time unit is substituted into formula (2) as n_{PRB}, to calculate the TBS for uplink corresponding to this non-SBFD time unit. Further, the TBS for uplink corresponding to the multiple SBFD time units and the TBS for uplink corresponding to the multiple non-SBFD time units are then accumulated to obtain the TBS for uplink. For example, in the case that the transmission resources include 2 SBFD time units and 3 non-SBFD time units in time domain, the TBS for uplink corresponding to each SBFD time unit and the TBS for uplink corresponding to each non-SBFD time unit may be calculated respectively. The obtained TBS for uplink corresponding to each time unit of the 5 time units are then accumulated to obtain the TBS applicable to TBoMS.

Optionally, the TBS may be determined using Approach 3. The sum of the number of symbols of the uplink transmission resources in the SBFD time unit and the number of symbols of the uplink transmission resources in the non-SBFD time unit may be averaged and substituted into formula (1) as ${N}_{symb}^{sh}$; the sum of the number of PRBs in the frequency domain resources of the uplink transmission resources that overlap with the uplink subband corresponding to the SBFD time unit and the number of PRBs of the uplink transmission resources in the non-SBFD time unit is averaged and substituted into formula (2) as n_{PRB}, to calculate the TBS for uplink.

Optionally, the TBS may be determined using Approach 3. The sum of the number of symbols of the uplink transmission resources in the SBFD time unit and the number of symbols of the uplink transmission resources in the non-SBFD time unit may be averaged and substituted into formula (1) as ${N}_{symb}^{sh}$; the sum of the number of PRBs in the frequency domain resources of the uplink transmission resources that overlap with the uplink subband corresponding to the SBFD time unit and the number of PRBs of the uplink transmission resources in the non-SBFD time unit is averaged and substituted into formula (4) as n_{PRB}, and the number of slots occupied by the transport block indicated by the first indication information is substituted into formula (4) as *N*, to obtaine the TBS for uplink.

In the embodiment of the present application shown in FIG. 8, the terminal device receives the resource scheduling information from the network device, which facilitates determining the transport block size based on the number of resources of the transmission resources configured by the resource scheduling information in the subband full duplex time unit and/or in the non-subband full duplex time unit. The number of resources in the subband full duplex time unit for determining the transport block size includes the number of frequency domain resources of the uplink transmission resources that overlap with the uplink subband, or the number of frequency domain resources of the downlink transmission resources that overlap with the downlink subband. The overlapping frequency domain resources are those that may be used for uplink or downlink, ensuring that the transport block size may be effectively applied to resource scheduling across the subband full duplex time unit and the non-subband full duplex time unit, thereby enhancing communication quality in subband full duplex communication scenarios.

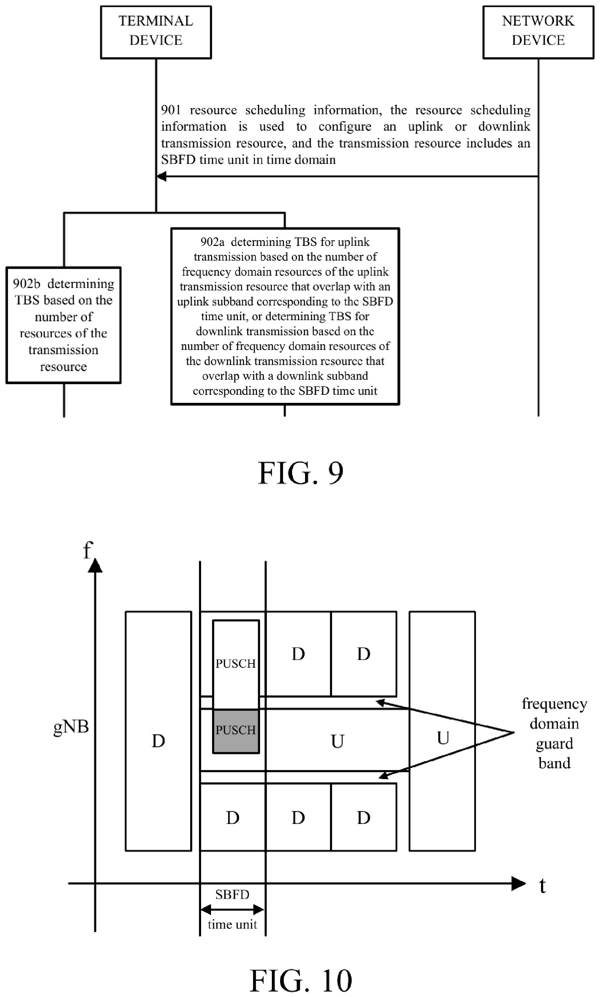

Referring to FIG. 9, FIG.9 is a schematic flowchart of another method of determining a TBS provided in an embodiment of the present application. The method may include but is not limited to the following steps.

**901**, A network device sends resource scheduling information to a terminal device, wherein the resource scheduling information is used to configure uplink or downlink transmission resources, and the transmission resources include an SBFD time unit in time domain. Correspondingly, the terminal device receives the resource scheduling information from the network device.

Optionally, in the case of dynamic resource scheduling, the resource scheduling information may be carried in a scheduling DCI. In the case of semi-static resource scheduling, the resource scheduling information may be carried in a higher layer signaling, such as in an RRC signaling. The resource scheduling information may also be carried in corresponding control information or signaling according to another resource scheduling approach, which is not limited in this context.

Optionally, the uplink transmission resources may be PUSCH, and the downlink transmission resources may be PDSCH.

Optionally, the method may further comprise the following step.

**902a**, The terminal device determines the TBS for uplink based on the number of frequency domain resources of the uplink transmission resources that overlap with the uplink subband corresponding to the SBFD time unit, or determines the TBS for downlink based on the number of frequency domain resources of the downlink transmission resources that overlap with the downlink subband corresponding to the SBFD time unit.

The transmission resources configured by the resource scheduling information including an SBFD time unit in time domain, refers to the current resource scheduling in the SBFD time unit by the network device falling within aforementioned situation 1.

Optionally, the number of frequency domain resources of the uplink transmission resources that overlap with the uplink subband corresponding to the SBFD time unit may refer to: the number of frequency domain resources of the uplink transmission resources that overlap with the uplink subband corresponding to one SBFD time unit. The number of frequency domain resources of the downlink transmission resources that overlap with the downlink subband corresponding to the SBFD time unit may refer to: the number of frequency domain resources of the downlink transmission resources that overlap with the downlink subband corresponding to one SBFD time unit. Here, the number of frequency domain resources refers to the number of PRBs.

In the case that the resource scheduling information configures uplink transmission resources, the terminal device determines the TBS for uplink based on the number of frequency domain resources of the uplink transmission resources that overlap with the uplink subband corresponding to the SBFD time unit. That is, the TBS for uplink is determined based on the number of frequency domain resources in the uplink transmission resources excluding the downlink subband corresponding to the SBFD time unit and the frequency domain guard band. For example, the number of PRBs in the frequency domain resources of the uplink transmission resources that overlap with the uplink subband corresponding to the SBFD time unit is substituted into formula (2) as n_{PRB}, to obtain the TBS for uplink.

Referring to FIG. 10, FIG.10 is a schematic diagram of another PUSCH scheduling by a network device provided in an embodiment of the present application. As shown in FIG. 10, there is an overlap between the PUSCH configured by the network device for a terminal device and a downlink subband corresponding to an SBFD time unit and a frequency domain guard band. In the resources corresponding to a non-SBFD time unit, D represents that all frequency domain resources corresponding to this time unit may only be used for downlink transmission, and U represents that all frequency domain resources corresponding to this time unit may only be used for uplink transmission. In the frequency domain resources corresponding to an SBFD time unit, D represents the downlink subband, and U represents an uplink subband. The frequency domain interval between the downlink subband and the uplink subband is the frequency domain guard band. The overlapping part between the PUSCH configured by the network device for the terminal device and the downlink subband corresponding to the SBFD time unit and the frequency domain guard band is represented by a blank bar labeled with PUSCH. The overlapping part between the PUSCH configured by the network device for the terminal device and the uplink subband corresponding to the SBFD time unit is represented by a gray bar labeled with PUSCH.

In the case that the resource scheduling information configures downlink transmission resources, the terminal device determines the TBS for downlink based on the number of frequency domain resources of the downlink transmission resources that overlap with the downlink subband corresponding to the SBFD time unit. That is, the TBS for downlink is determined based on the number of frequency domain resources in the downlink transmission resources excluding at least the uplink subband corresponding to the SBFD time unit and the frequency domain guard band.

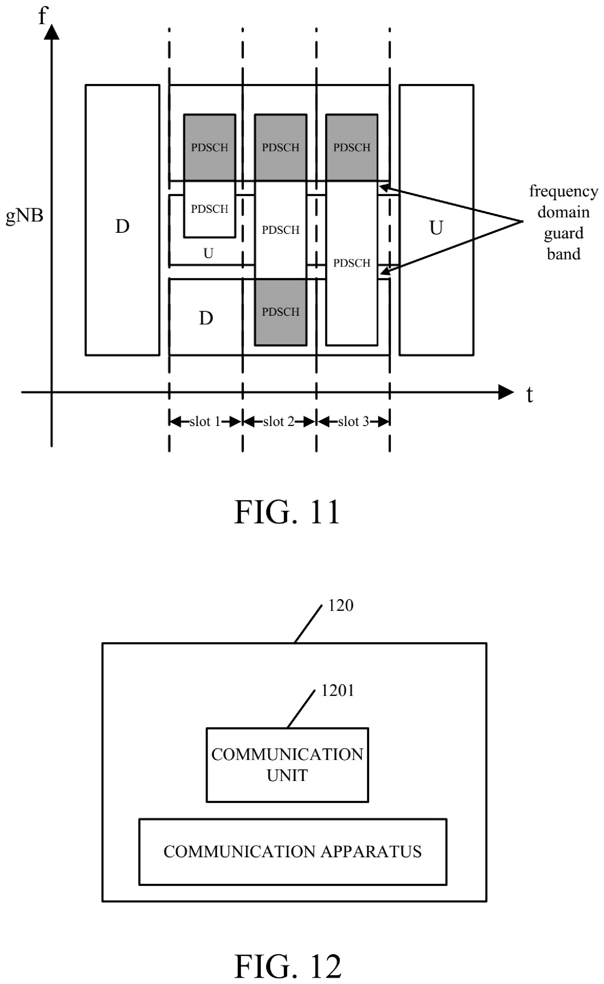

Referring to FIG. 11, FIG.11 is a schematic diagram of another PDSCH scheduling by a network device provided in an embodiment of the present application. As shown in FIG. 11, the PDSCH configured by the network device for a terminal device overlaps with an uplink subband corresponding to an SBFD time unit and a frequency domain guard band. In the resources corresponding to a non-SBFD time unit, D represents that all frequency domain resources corresponding to this time unit may only be used for downlink transmission, and U represents that all frequency domain resources corresponding to this time unit may only be used for uplink transmission. In the frequency domain resources corresponding to an SBFD time unit, D represents a downlink subband, and U represents the uplink subband. The frequency domain interval between the downlink subband and the uplink subband is the frequency domain guard band. In slot 1 and slot 2, the overlapping parts between the PDSCH configured by the network device for the terminal device and the uplink subband corresponding to the SBFD time unit and the frequency domain guard band are represented by blank bars labeled with PDSCH, and the overlapping parts between the PDSCH configured by the network device for the terminal device and the downlink subband corresponding to the SBFD time unit are represented by gray bars labeled with PDSCH. In slot 3, the overlapping part between the PDSCH configured by the network device for the terminal device and the uplink subband corresponding to the SBFD time unit and the frequency domain guard band, as well as the overlapping part between the PDSCH configured by the network device for the terminal device and the downlink subband corresponding to the SBFD time unit, is represented by a blank bar labeled with PDSCH; and the overlapping part between the PDSCH configured by the network device for the terminal device and another downlink subband corresponding to the SBFD time unit is represented by a gray bar labeled with PDSCH.

Optionally, the terminal device determining the TBS for downlink based on the number of frequency domain resources of the downlink transmission resources that overlap with the downlink subband corresponding to the SBFD time unit, comprises the following two methods.

Method 1: The terminal device determines the TBS for downlink based on the number of all frequency domain resources of the downlink transmission resources that overlap with the downlink subband corresponding to the SBFD time unit. That is, it determines the TBS for downlink based on the number of resources of the downlink transmission resources excluding the uplink subband corresponding to the SBFD time unit and the frequency domain guard band. For example, the number of PRBs of all frequency domain resources of the downlink transmission resources that overlap with the downlink subband corresponding to the SBFD time unit is substituted into formula (2) as n_{PRB}, to obtain the TBS for downlink.

Method 2: The terminal device determines the TBS for downlink based on the number of a portion of frequency domain resources of the downlink transmission resources that overlap with the downlink subband corresponding to the SBFD time unit. That is, it determines the TBS for downlink based on the number of resources of the downlink transmission resources excluding the uplink subband corresponding to the SBFD time unit, the frequency domain guard band and a portion of frequency domain resources in the downlink subband. For example, the number of PRBs of a portion of frequency domain resources of the downlink transmission resources that overlap with the downlink subband corresponding to the SBFD time unit is substituted into formula (2) as n_{PRB}, to obtain the TBS for downlink.

Method 1 may be applicable to the situation where a terminal device supports non-continuous downlink transmission across uplink subband with SBFD resource configuration. Method 2 may be applicable to the situation where the terminal device does not support non-continuous downlink transmission across uplink subband with SBFD resource configuration. For Method 2, a portion of frequency domain resources are determined based on second configuration information, predefined information, or a second default value. Optionally, the second configuration information or the second default value is sent to the terminal device by the network device, or predefined on the terminal device. For example, the second configuration information may configure, the predefined information may define, or the second default value may indicate: determining the TBS for downlink based on the frequency domain resources of a downlink subband with a higher or a lower frequency domain position that overlap with the transmission resources.

As shown in FIG. 11, slot 1 to slot 3 are SBFD time units. In the frequency domain resources corresponding to slot 1, the PDSCH configured by the network device overlaps with one downlink subband. The terminal device may adopt Method 1. That is, the terminal device determines the TBS for downlink based on the number of frequency domain resources of the PDSCH configured by the network device that overlap with the downlink subband. In the frequency domain resources corresponding to slot 2, the PDSCH configured by the network device overlaps with two downlink subbands that span the uplink subband. The terminal device may adopt Method 1. That is, the terminal device determines the TBS for downlink based on the number of frequency domain resources of the PDSCH configured by the network device that overlap with the two downlink subbands that span the uplink subband. In the frequency domain resources corresponding to slot 3, the PDSCH configured by the network device overlaps with two downlink subbands that span the uplink subband. The terminal device may adopt Method 2. That is, the terminal device determines the TBS for downlink based on the number of frequency domain resources of the PDSCH configured by the network device that overlap with one of the downlink subbands. This downlink subband is determined as the one with a higher frequency domain position among the two downlink subbands according to the second configuration information, the predefined information, or the second default value.

Optionally, the method further comprises the following after step 901 is performed.

**902b**, The terminal device determines the TBS based on the number of resources of the transmission resources.

The number of resources of the transmission resources comprises the number of symbols within each slot configured for uplink or downlink transmission, and the number of PRBs configured for uplink or downlink transmission. For example, the number of symbols may be substituted into formula (1) as Nₛ^{s}_{y}^{h}_{mb}, and the number of PRBs may be substituted into formula (2) as n_{PRB}, to obtain the TBS for uplink or downlink.

It should be noted that either of steps 902a and 902b is performed.

In the embodiment of the present application shown in FIG. 9, the terminal device receives the resource scheduling information from the network device, which facilitates determining the transport block size based on the number of resources of the transmission resources configured by the resource scheduling information in the subband full duplex time unit. The transport block size for uplink is determined based on the number of frequency domain resources of the uplink transmission resources that overlap with the uplink subband corresponding to the subband full duplex time unit, or the transport block size for downlink is determined based on the number of frequency domain resources of the downlink transmission resources that overlap with the downlink subband corresponding to the subband full duplex time unit, ensuring that the transport block size may be effectively applied to resource scheduling in the subband full duplex time unit, thereby enhancing communication quality in subband full duplex communication scenarios.

It should be noted that for the method embodiments mentioned above, they are described as a series of combination of actions for simplification. However, those skilled in the art should appreciate that the present application is not limited by the described sequence of actions, as some steps may be performed in other sequences or simultaneously according to the present application. Secondly, those skilled in the art should also appreciate that the embodiments described in the specification are all preferred embodiments, and not all the actions and modules involved are required by the present application.

In the aforementioned embodiments, each embodiment is described with its own emphasis. Any combination of multiple embodiments may be used. For parts not detailed in a particular embodiment, reference can be made to the relevant descriptions in other embodiments.

The solutions of the embodiments of the present application are mainly introduced from the perspective of method side in the above. It can be understood that in order to achieve the above functions, a terminal device and a network device include corresponding hardware structures and/or software modules for executing various functions. Those skilled in the art should easily realize that, in combination with the units and algorithm steps described in the embodiments disclosed herein, the present application may be implemented in the form of hardware or a combination of hardware and computer software. Whether a certain function is performed in hardware or in computer software driving hardware depends on the specific application and design constraints of the technical solution. One skilled in the art may implement the described functions for each specific application with different methods, but such implementation should not be considered as going beyond the scope of the present application.

Embodiments of the present application may divide the functional units of a terminal device and a network device according to the above method examples. For example, various functional units may be divided to correspond to various functions, or two or more functions may be integrated into one processing unit. The above integrated units may be implemented in the form of hardware or in the form of software program modules. It should be noted that the division of units in embodiments of the present application is illustrative and is merely a logical functional division, and there may be other divisions in an actual implementation.

Referring to FIG. 12, FIG. 12 is a schematic structural diagram of a communication apparatus provided in an embodiment of the present application. The communication apparatus 120 may be a terminal device, or an apparatus configured for use with a terminal device, such as a processor, a chip, or a chip module. Alternatively, the communication apparatus 120 may be a network device, or an apparatus configured for use with a network device, such as a processor, a chip, or a chip module. As shown in FIG. 12, the communication apparatus 120 comprises a communication unit 1201. The communication unit 1201 may be a module unit for processing signals, data, information, etc., which is not limited in this context.

The communication apparatus 120 may further comprise a storage unit for storing computer program codes or instructions executed by the communication apparatus 120. The storage unit may be a memory.

In addition, it should be noted that the communication apparatus 120 may be a chip or a chip module.

The communication unit 1201 may be integrated into a processing unit. The processing unit may be a processor or controller, such as a Central Processing Unit (CPU), a general-purpose processor, a digital signal processor (DSP), an application-specific integrated circuit (ASIC), a field programmable gate array (FPGA), or another programmable logic device, transistor logic device, hardware component, or any combination thereof. It may implement or execute various exemplary logical blocks, modules, and circuits described in conjunction with the disclosure of the present application. The processing unit may also be a combination of computing functions, e.g. a combination of one or more microprocessors, a combination of DSP and microprocessors, etc.

In a specific implementation, the communication unit 1201 is configured to perform any step performed by a terminal device or a network device in the aforementioned method embodiments. A detailed explanation is provided below.

In the case that the communication unit 1201 is configured to perform any step performed by a terminal device in the method embodiment shown in FIG. 8:
The communication unit 1201 is configured to: receive resource scheduling information, wherein the resource scheduling information is used to configure uplink or downlink transmission resources, and the transmission resources comprise an SBFD time unit and a non-SBFD time unit in time domain; a TBS is determined based on a number of resources of the transmission resources in the SBFD time unit and/or a number of resources of the transmission resources in the non-SBFD time unit; wherein, the number of resources of the uplink transmission resources in the SBFD time unit comprises a number of frequency domain resources of the uplink transmission resources that overlap with an uplink subband corresponding to the SBFD time unit, or the number of resources of the downlink transmission resources in the SBFD time unit comprises a number of frequency domain resources of the downlink transmission resources that overlap with a downlink subband corresponding to the SBFD time unit.

Optionally, the number of resources of the uplink transmission resources in the SBFD time unit further comprises: a number of time domain symbols of the uplink transmission resources in the SBFD time unit; or, the number of resources of the downlink transmission resources in the SBFD time unit further comprises: a number of time domain symbols of the downlink transmission resources in the SBFD time unit.

Optionally, the number of resources of the transmission resources in the non-SBFD time unit comprises: the number of frequency domain resources corresponding to the transmission resources in the non-SBFD time unit and the number of time domain symbols of the transmission resources in the non-SBFD time unit.

Optionally, the TBS being determined based on the number of resources of the transmission resources in the SBFD time unit and/or the number of resources of the transmission resources in the non-SBFD time unit, comprises: in response to a first time unit in the transmission resources being an SBFD time unit, the TBS is determined based on the number of resources of the transmission resources in the SBFD time unit; or, in response to a first time unit in the transmission resources being a non-SBFD time unit, the TBS is determined based on the number of resources of the transmission resources in the non-SBFD time unit; or, in response to a last time unit in the transmission resources being an SBFD time unit, the TBS is determined based on the number of resources of the transmission resources in the SBFD time unit; or, in response to a last time unit in the transmission resources being a non-SBFD time unit, the TBS is determined based on the number of resources of the transmission resources in the non-SBFD time unit.

Optionally, the TBS being determined based on the number of resources of the transmission resources in the SBFD time unit and/or the number of resources of the transmission resources in the non-SBFD time unit, comprises: based on configuration indicated by first configuration information or indication of a first default value, the TBS is determined according to the number of resources of the transmission resources in the SBFD time unit or the number of resources of the transmission resources in the non-SBFD time unit.

Optionally, the TBS being determined based on the number of resources of the transmission resources in the SBFD time unit and/or the number of resources of the transmission resources in the non-SBFD time unit, comprises: in response to a number of time units occupied by the SBFD time unit being greater than a number of time units occupied by the non-SBFD time unit in the transmission resources, the TBS is determined based on the number of resources of the transmission resources in the SBFD time unit; or, in response to the number of time units occupied by non-SBFD time unit being greater than the number of time units occupied by the SBFD time unit in the transmission resources, the TBS is determined based on the number of resources of the transmission resources in the non-SBFD time units.

Optionally, the transmission resources are used for repetition, and the TBS is applied to a transmission occasion corresponding to the SBFD time unit and a transmission occasion corresponding to the non-SBFD time unit.

Optionally, the transport block is transmitted on multiple slots; the TBS being determined based on the number of resources of the transmission resources in the SBFD time unit and/or the number of resources of the transmission resources in the non-SBFD time unit, comprises: the TBS is determined based on the number of resources of the transmission resources in the SBFD time unit and first indication information, wherein the first indication information is carried by the resource scheduling information and is used to indicate a number of slots occupied by the transport block; or, the TBS is determined based on the number of resources of the transmission resources in the non-SBFD time unit and the first indication information; or, the TBS is determined based on the number of resources of the transmission resources in the SBFD time unit and the number of resources of the transmission resources in the non-SBFD time unit.

In the case that the communication unit 1201 is configured to perform any step performed by a terminal device in the method embodiment shown in FIG. 9:
The communication unit 1201 is configured to: receive resource scheduling information, wherein the resource scheduling information is used to configure uplink or downlink transmission resources, and the transmission resources include an SBFD time unit in time domain; a TBS for uplink is determined based on a number of frequency domain resources of the uplink transmission resources that overlap with an uplink subband corresponding to the SBFD time unit, or a TBS for downlink is determined based on a number of frequency domain resources of the downlink transmission resources that overlap with a downlink subband corresponding to the SBFD time unit.

Optionally, the TBS for downlink being determined based on the number of frequency domain resources of the downlink transmission resources that overlap with the downlink subband corresponding to the SBFD time unit, comprises: the TBS for downlink is determined based on a number of a portion of frequency domain resources of the transmission resources that overlap with the downlink subband;

wherein the portion of frequency domain resources are determined based on second configuration information, predefined information, or a second default value.

In the case that the communication unit 1201 is configured to perform any step performed by a network device in the method embodiment shown in FIG. 8:
The communication unit 1201 is configured to: send resource scheduling information, wherein the resource scheduling information is used to configure uplink or downlink transmission resources, and the transmission resources comprise an SBFD time unit and a non-SBFD time unit in time domain. A TBS is determined based on a number of resources of the transmission resources in the SBFD time unit and/or a number of resources of the transmission resources in the non-SBFD time unit; wherein, the number of resources of the uplink transmission resources in the SBFD time unit comprises a number of frequency domain resources of the uplink transmission resources that overlap with an uplink subband corresponding to the SBFD time unit, or the number of resources of the downlink transmission resources in the SBFD time unit comprises a number of frequency domain resources of the downlink transmission resources that overlap with a downlink subband corresponding to the SBFD time unit.

Optionally, the number of resources of the uplink transmission resources in the SBFD time unit further comprises: a number of time domain symbols of the uplink transmission resources in the SBFD time unit; or, the number of resources of the downlink transmission resources in the SBFD time unit further comprises: a number of time domain symbols of the downlink transmission resources in the SBFD time unit.

Optionally, the number of resources of the transmission resources in the non-SBFD time unit comprises: the number of frequency domain resources corresponding to the transmission resources in the non-SBFD time unit and the number of time domain symbols of the transmission resources in the non-SBFD time unit.

Optionally, the TBS being determined based on the number of resources of the transmission resources in the SBFD time unit and/or the number of resources of the transmission resources in the non-SBFD time unit, comprises: in response to a first time unit in the transmission resources being an SBFD time unit, the TBS is determined based on the number of resources of the transmission resources in the SBFD time unit; or, in response to a first time unit in the transmission resources being a non-SBFD time unit, the TBS is determined based on the number of resources of the transmission resources in the non-SBFD time unit; or, in response to a last time unit in the transmission resources being an SBFD time unit, the TBS is determined based on the number of resources of the transmission resources in the SBFD time unit; or, in response to a last time unit in the transmission resources being a non-SBFD time unit, the TBS is determined based on the number of resources of the transmission resources in the non-SBFD time unit.

Optionally, the TBS being determined based on the number of resources of the transmission resources in the SBFD time unit and/or the number of resources of the transmission resources in the non-SBFD time unit, comprises: based on configuration indicated by first configuration information or indication of a first default value, the TBS is determined according to the number of resources of the transmission resources in the SBFD time unit or the number of resources of the transmission resources in the non-SBFD time unit.

Optionally, the TBS being determined based on the number of resources of the transmission resources in the SBFD time unit and/or the number of resources of the transmission resources in the non-SBFD time unit, comprises: in response to a number of time units occupied by the SBFD time unit being greater than a number of time units occupied by the non-SBFD time unit in the transmission resources, the TBS is determined based on the number of resources of the transmission resources in the SBFD time unit; or, in response to a number of time units occupied by the non-SBFD time unit being greater than a number of time units occupied by the SBFD time unit in the transmission resources, the TBS is determined based on the number of resources of the transmission resources in the non-SBFD time unit.

Optionally, the transmission resources are used for repetition, and the TBS is applied to a transmission occasion corresponding to the SBFD time unit and a transmission occasion corresponding to the non-SBFD time unit.

Optionally, the transport block is transmitted on multiple slots; the TBS being determined based on the number of resources of the transmission resources in the SBFD time unit and/or the number of resources of the transmission resources in the non-SBFD time unit, comprises: the TBS is determined based on the number of resources of the transmission resources in the SBFD time unit and first indication information, wherein the first indication information is carried by the resource scheduling information and is used to indicate a number of slots occupied by the transport block; or, the TBS is determined based on the number of resources of the transmission resources in the non-SBFD time unit and first indication information; or, the TBS is determined based on the number of resources of the transmission resources in the SBFD time unit and the number of resources of the transmission resources in the non-SBFD time unit.

In the case that the communication unit 1201 is configured to perform any step performed by a network device in the method embodiment shown in FIG. 9:
The communication unit 1201 is configured to send resource scheduling information, wherein the resource scheduling information is used to configure uplink or downlink transmission resources. The transmission resources include an SBFD time unit in time domain. A TBS for uplink is determined based on a number of frequency domain resources of the uplink transmission resources that overlap with an uplink subband corresponding to the SBFD time unit, or a TBS for downlink is determined based on a number of frequency domain resources of the downlink transmission resources that overlap with a downlink subband corresponding to the SBFD time unit.

Optionally, the TBS for downlink being determined based on the number of frequency domain resources of the downlink transmission resources that overlap with the downlink subband corresponding to the SBFD time unit, comprises: the TBS for downlink is determined based on the number of a portion of frequency domain resources of the transmission resources that overlap with the downlink subband; wherein the portion of frequency domain resources are determined based on second configuration information, predefined information, or a second default value.

The relevant content of this implementation may be found in the aforementioned method embodiments, and will not be detailed here. Embodiments of the present application and the aforementioned method embodiments are based on the same concept and yield the same technical effects. For the specific principles, please refer to the description of the aforementioned method embodiments, which will not be repeated here.

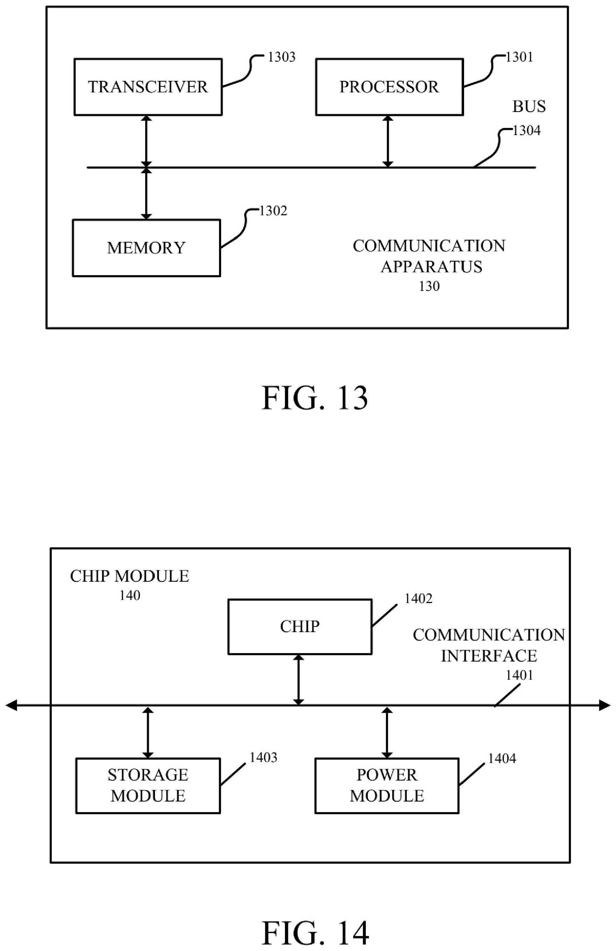

Referring to FIG. 13, FIG. 13 is a schematic structural diagram of another communication apparatus provided in an embodiment of the present application. The communication apparatus 130 may be a terminal device, or an apparatus configured for use with a terminal device, such as a processor, a chip, or a chip module. Alternatively, the communication apparatus 130 may be a network device, or an apparatus configured for use with a network device, such as a processor, a chip, or a chip module. The communication apparatus 130 may comprise a processor 1301. Optionally, the communication apparatus 130 may further comprise a memory 1302 and computer programs or instructions (not shown in FIG. 13) stored on the memory 1302. The processor 1301 and the memory 1302 are interconnected. Optionally, the communication apparatus 130 may further comprise a transceiver 1303. The processor 1301, the memory 1302, and the transceiver 1303 may be connected via a bus 1304 or connected in other forms. The bus is represented in a bold line in FIG. 13. The forms of connection between other components are only for schematic illustration and are not for limitation. The bus may be classified as an address bus, a data bus, a control bus, etc. For ease of illustration, the bus is shown with only one bold line in FIG. 13, but it does not mean that there is only one bus or one type of bus.

"Coupling" in the embodiments of the present application includes indirect coupling or communication connection between devices, units, or modules, which may be electrical, mechanical, or other forms, and is used for information interaction between devices, units, or modules. In the embodiments of the present application, the medium for connection between the processor 1301, the memory 1302, and the transceiver 1303 is not specifically limited herein.

The memory 1302 may include read-only memory and random access memory, and provides instructions and data to the processor 1301. A part of the memory 1302 may also include non-volatile random access memory.

The processor 1301 may be a Central Processing Unit (CPU), or the processor 1301 may be another general-purpose processor, a Digital Signal Processor (DSP), an Application Specific Integrated Circuit (ASIC), a Field-Programmable Gate Array (FPGA), or another programmable logic device, discrete gate or transistor logic device, discrete hardware component, etc. The general-purpose processor may be a microprocessor, or alternatively, the processor 1301 may be any conventional processor, etc.

The transceiver 1303 is configured to receive or transmit data.

In an implementation, the memory 1302 is configured to store computer programs or instructions; the processor 1301 is configured to call the computer programs or instructions stored in the memory 1302, so as to perform the steps performed by a terminal device or a network device in the method embodiments corresponding to FIG. 8 or FIG. 9.

In the embodiments of the present application, the methods provided by the embodiments of the present application may be implemented by executing computer programs (including program codes or instructions) capable of performing the steps related to the above methods on a general purpose computing device such as a computer that includes processing elements and storage elements, such as a CPU, Random Access Memory (RAM), Read-Only Memory (ROM), etc. The computer programs or instructions may be recorded on, for example, a computer-readable recording medium, loaded into the above computing device through the computer-readable recording medium, and executed therein.

Based on the same inventive concept, the principle for solving problems and beneficial effects of the communication apparatus 130 provided in the embodiments of the present application are similar to those of the methods in the embodiments shown in FIG. 8 or FIG.9 of the present application. Reference may be made to the principles and beneficial effects of the method implementation. For brevity, details are not repeated herein.

The above communication apparatus may be, for example, a chip or a chip module.

Embodiments of the present application also provide a chip comprising a processor, and the processor may perform the relevant steps of a terminal device or a network device in the method embodiments mentioned above. For the specific implementation of the terminal device or the network device, please refer to the description of the relevant content in the aforementioned method embodiments, and will not be repeated here.

In an optional implementation, the chip further comprises at least one first memory and at least one second memory, wherein the above at least one first memory and the above at least one processor are interconnected by wires, and instructions are stored in the above first memory, wherein the above at least one second memory and the above processor are interconnected by wires, and data that needs to be stored in the method embodiments mentioned above is stored in the above second memory.

Referring to FIG. 14, FIG. 14 is a schematic structural diagram of a chip module provided in an embodiment of the present application. The chip module 140 may perform the relevant steps of a terminal device or a network device in the method embodiments mentioned above, and the chip module 140 comprises: a communication interface 1401 and a chip 1402.

The communication interface 1401 is configured for internal communication within the chip module, or for communication between the chip module and external devices. The communication interface 1401 may also be described as a communication module. The chip 1402 comprises a processor (not shown in FIG. 14). The chip 1402 is configured to implement the functions of a terminal device or a network device in embodiments of the present application. That is, the processor of the chip 1402 is configured to perform the relevant steps of the terminal device or the network device in the aforementioned method embodiments. For the specific implementation of the terminal device or the network device, please refer to the description of the relevant content in the aforementioned method embodiments, and will not be repeated here.

Optionally, the chip 1402 may further comprise a memory (not shown in FIG. 14) and computer programs or instructions stored on the memory (not shown in FIG. 14). The processor executes the computer programs or instructions to implement the relevant steps executed by the terminal device or network device described in the aforementioned method embodiments. For the specific implementation of the terminal device or the network device, please refer to the description of the relevant content in the aforementioned method embodiments, and will not be repeated here.

Optionally, the chip 1402 and the communication interface 1401 are interconnected by wires; the chip module 140 may exchange data with other chip modules, other terminals, servers, and other modules or devices through the communication interface 1401.

Optionally, the chip module 140 may further comprise a storage module 1403 and a power module 1404. The storage module 1403 is configured to store data and instructions. The power module 1404 is configured to provide power for the chip module.

For apparatuses or products applied to or integrated into a chip module, each module included may be implemented in hardware such as circuits, and different modules may be located in the same component (e.g., chip, circuit module, etc.) or different components of the chip module, or at least some modules may be implemented by software programs executing on a processor integrated into the chip module, and the remaining (if any) modules may be implemented in hardware such as circuits.

An embodiment of the present application further provides a computer-readable storage medium having computer programs or instructions stored thereon. When the computer programs or instructions are executed, for example, when executed by a processor or a computer, the method flow of the method embodiments performed by a terminal device or a network device described above will be implemented. For the specific implementation of the terminal device or the network device, please refer to the description of the relevant content in the aforementioned embodiments, and will not be repeated here. It is understood that the computer storage medium here may include the built-in storage medium in a terminal device or in a network device, and of course, it may also include extended storage medium supported by the terminal device or network device. The computer storage medium provides a storage space, which stores the operating system of the terminal device or the network device. Furthermore, one or more instructions suitable for being loaded and executed by the processor are also stored in this storage space. These instructions may be one or more computer programs (including program codes). It should be noted that the computer storage medium here may be a high-speed RAM memory, a non-volatile memory (NVM), such as at least one disk memory, or a Flash memory; optionally, it may also be at least one computer storage medium located remotely from the aforementioned processor. For the specific implementation of the terminal device or the network device, please refer to the description of the relevant content in the aforementioned method embodiments, and will not be repeated here.

Embodiments of the present application also provide a computer program product comprising computer programs or instructions, when executed (for example, executed by a processor or a computer), causing the processor or computer executes the method flow of the method embodiments performed by the aforementioned terminal device or the aforementioned network device.

Embodiments of the present application provide a communication system. The communication system may comprise a terminal device executing the method of the above-mentioned method embodiments, and a network device executing the method of the above-mentioned method embodiments.

It should be noted that for the various embodiments mentioned above, for simplicity, they are all described as a series of action combinations. Those skilled in the art should appreciate that the present application is not limited by the order of the described actions, as some steps in embodiments of the present application may be performed in other orders or simultaneously. Additionally, those skilled in the art should also appreciate that the embodiments described in the specification are all preferred embodiments, and not all the actions, steps, modules or units involved are required by an embodiment of the present application.

In the aforementioned embodiments, the description of each embodiment in the present application has its respective emphasis. For parts not elaborated in a particular embodiment, reference can be made to the relevant description in other embodiments.

The steps of the method or algorithm described in the embodiments of the present application may be implemented in hardware or by a processor executing software instructions. The software instructions may be composed of corresponding software modules, which may be stored in a RAM, a flash memory, a ROM, an erasable programmable ROM (EPROM), an electrically erasable programmable ROM (EEPROM), a register, a hard disks, a removable hard disk, a compact disc-read only memory (CD-ROM), or any other form of storage medium well known in the art. An exemplary storage medium is coupled to a processor, enabling the processor to read information from and write information to the storage medium. Of course, the storage medium may also be a component of the processor. The processor and storage medium may be located in an ASIC. Additionally, the ASIC may be located in a network device or a terminal device. Of course, the processor and storage medium may also exist as discrete components in a network device or a terminal device.

Those skilled in the art should appreciate that in one or more of the above examples, the functions described in embodiments of the present application may be implemented, in whole or in part, in software, hardware, firmware, or any combination thereof. When implemented in software, the above embodiments may be implemented in whole or in part in the form of a computer program product. The computer program product comprises one or more computer instructions. When the computer program instructions are loaded and executed on a computer, the processes or function described in the embodiments of the present application are generated in whole or in part. The computer may be a general-purpose computer, a special-purpose computer, a computer network, or other programmable devices. The computer instructions may be stored in a computer-readable storage medium or transmitted from one computer-readable storage medium to another. For example, the computer instructions may be transmitted from one website, computer, server, or data center to another website, computer, server, or data center by wired (such as coaxial cable, fiber optic, digital subscriber line (DSL)) or wireless (such as infrared, wireless, microwave, etc.) means. The computer-readable storage medium may be any available medium that is accessible to a computer, or may be a data storage device, such as a server or data center, incorporating one or more available medium. The available medium may be magnetic medium (such as a floppy disk, a hard disk, a magnetic tape), optical medium (such as a digital video disc (DVD)), or semiconductor medium (such as a solid state disk (SSD)).

Regarding the various modules/units included in various apparatuses and products described in the above embodiments, they may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal device, each module/unit included may be implemented in hardware such as circuits, different modules/units may be located in the same component (e.g., chip, circuit module, etc.) or different components of the terminal, or at least some modules/units may be implemented by software programs executing on a processor integrated into the terminal, and the remaining (if any) modules/units may be implemented in hardware such as circuits.

The detailed description above provides further detailed explanations of the objectives, technical solutions, and beneficial effects of the embodiments of the present application. It should be understood that the above description is merely specific embodiments of the present application and is not intended to limit the scope of protection of the embodiments of the present application. Any modifications, equivalent substitutions, improvements, etc. made on the basis of the technical solutions of the embodiments of the present application shall be encompassed within the scope of protection of the embodiments of the present application.

## Claims

1. A method for determining a transport block size, **characterized in that** the method comprises:
receiving resource scheduling information, the resource scheduling information for configuring uplink or downlink transmission resources, and the transmission resources comprise a subband full duplex time unit and a non-subband full duplex time unit in time domain; the transport block size is determined based on a number of resources of the transmission resources in the subband full duplex time unit and/or a number of resources of the transmission resources in the non-subband full duplex time unit; wherein, the number of resources in the subband full duplex time unit of the uplink transmission resources comprises a number of frequency domain resources of the uplink transmission resources that overlap with an uplink subband corresponding to the subband full duplex time unit, or a number of resources in the subband full duplex time unit of the downlink transmission resources comprises a number of frequency domain resources of the downlink transmission resources that overlap with a downlink subband corresponding to the subband full duplex time unit.

2. The method according to claim 1, **characterized in that** the number of resources in the subband full duplex time unit of the uplink transmission resources further comprises: a number of time domain symbols in the subband full duplex time unit of the uplink transmission resources; or,
the number of resources in the subband full duplex time unit of the downlink transmission resources further comprises: a number of time domain symbols in the subband full duplex time unit of the downlink transmission resources.

3. The method according to claim 1 or 2, **characterized in that** the number of resources in the non-subband full duplex time unit of the transmission resources comprises: a number of corresponding frequency domain resources in the non-subband full duplex time unit of the transmission resources and the number of time domain symbols in the non-subband full duplex time unit of the transmission resources.

4. The method according to any one of claims 1 to 3, **characterized in that** the transport block size being determined based on the number of resources in the subband full duplex time unit of the transmission resources and/or the number of resources in the non-subband full duplex time unit of the transmission resources, comprises:
in response to a first time unit in the transmission resources being the subband full duplex time unit, the transport block size is determined based on the number of resources in the subband full duplex time unit of the transmission resources; or,
in response to the first time unit in the transmission resources being the non-subband full duplex time unit, the transport block size is determined based on the number of resources in the non-subband full duplex time unit of the transmission resources; or,
in response to a last time unit in the transmission resources being the subband full duplex time unit, the transport block size is determined based on the number of resources in the subband full duplex time unit of the transmission resources; or,
in response to the last time unit in the transmission resources being the non-subband full duplex time unit, the transport block size is determined based on the number of resources in the non-subband full duplex time unit of the transmission resources.

5. The method according to any one of claims 1 to 3, **characterized in that** the transport block size being determined based on the number of resources in the subband full duplex time unit of the transmission resources and/or the number of resources in the non-subband full duplex time unit of the transmission resources, comprises:
based on a configuration indicated by first configuration information or an indication of a first default value, the transport block size is determined according to the number of resources in the subband full duplex time unit of the transmission resources or the number of resources in the non-subband full duplex time unit of the transmission resources.

6. The method according to any one of claims 1 to 3, **characterized in that** the transport block size being determined based on the number of resources in the subband full duplex time unit of the transmission resources and/or the number of resources in the non-subband full duplex time unit of the transmission resources, comprises:
in response to a number of time units occupied by the subband full duplex time unit being greater than the number of time units occupied by the non-subband full duplex time unit in the transmission resources, the transport block size is determined based on the number of resources in the subband full duplex time unit of the transmission resources; or
in response to the number of time units occupied by the non-subband full duplex time unit being greater than the number of time units occupied by the subband full duplex time unit in the transmission resources, the transport block size is determined based on the number of resources in the non-subband full duplex time unit of the transmission resources.

7. The method according to any one of claims 1 to 6, **characterized in that** the transmission resources are used for repetition, and the transport block size is applied to a transmission occasion corresponding to the subband full duplex time unit and a transmission occasion corresponding to the non-subband full duplex time unit.

8. The method according to any one of claims 1 to 6, **characterized in that** the transport block is transmitted on multiple slots; the transport block size being determined based on the number of resources in the subband full duplex time unit of the transmission resources and/or the number of resources in the non-subband full duplex time unit of the transmission resources, comprises:
the transport block size is determined based on the number of resources in the subband full duplex time unit of the transmission resources and first indication information, wherein the first indication information is carried by the resource scheduling information and is used to indicate a number of slots occupied by the transport block; or,
the transport block size is determined based on the number of resources in the non-subband full duplex time unit of the transmission resources and the first indication information; or,
the transport block size is determined based on the number of resources in the subband full duplex time unit of the transmission resources and the number of resources in the non-subband full duplex time unit of the transmission resources.

9. A method for determining a transport block size, **characterized in that** the method comprises:
receiving resource scheduling information, wherein the resource scheduling information is used to configure uplink or downlink transmission resources, and the transmission resources comprise a subband full duplex time unit in time domain; wherein the transport block size for uplink is determined based on a number of frequency domain resources of the uplink transmission resources that overlap with an uplink subband corresponding to the subband full duplex time unit, or the transport block size for downlink is determined based on a number of frequency domain resources of the downlink transmission resources that overlap with a downlink subband corresponding to the subband full duplex time unit.

10. The method according to claim 9, **characterized in that** the transport block size for downlink being determined based on the number of frequency domain resources of the downlink transmission resources that overlap with the downlink subband corresponding to the subband full duplex time unit, comprises:
the transport block size for downlink is determined based on a number of a portion of frequency domain resources of the transmission resources that overlap with the downlink subband;
wherein the portion of frequency domain resources are determined based on second configuration information, predefined information, or a second default value.

11. A method for determining a transport block size, **characterized in that** the method comprises:
sending resource scheduling information, wherein the resource scheduling information is used to configure uplink or downlink transmission resources, and the transmission resources comprise a subband full duplex time unit and a non-subband full duplex time unit in time domain; wherein the transport block size is determined based on a number of resources in the subband full duplex time unit of the transmission resources and/or a number of resources in the non-subband full duplex time unit of the transmission resources; wherein, the number of resources in the subband full duplex time unit of the uplink transmission resources comprises a number of frequency domain resources of the uplink transmission resources that overlap with an uplink subband corresponding to the subband full duplex time unit, or the number of resources in the subband full duplex time unit of the downlink transmission resources comprises a number of frequency domain resources of the downlink transmission resources that overlap with a downlink subband corresponding to the subband full duplex time unit.

12. The method according to claim 11, **characterized in that** the number of resources in the subband full duplex time unit of the uplink transmission resources further comprises: a number of time domain symbols in the subband full duplex time unit of the uplink transmission resources; or,
the number of resources in the subband full duplex time unit of the downlink transmission resources further comprises: a number of time domain symbols in the subband full duplex time unit of the downlink transmission resources.

13. The method according to claim 11 or 12, **characterized in that** the number of resources in the non-subband full duplex time unit of the transmission resources comprises: a number of corresponding frequency domain resources of the transmission resources in the non-subband full duplex time unit and a number of time domain symbols in the non-subband full duplex time unit of the transmission resources.

14. The method according to any one of claims 11 to 13, **characterized in that** the transport block size being determined based on the number of resources in the subband full duplex time unit of the transmission resources and/or the number of resources in the non-subband full duplex time unit of the transmission resources, comprises:
in response to a first time unit in the transmission resources being the subband full duplex time unit, the transport block size is determined based on the number of resources in the subband full duplex time unit of the transmission resources; or,
in response to a first time unit in the transmission resources being the non-subband full duplex time unit, the transport block size is determined based on the number of resources in the non-subband full duplex time unit of the transmission resources; or,
in response to a last time unit in the transmission resources being the subband full duplex time unit, the transport block size is determined based on the number of resources in the subband full duplex time unit of the transmission resources; or,
in response to a last time unit in the transmission resource being the non-subband full duplex time unit, the transport block size is determined based on the number of resources in the non-subband full duplex time unit of the transmission resources.

15. The method according to any one of claims 11 to 13, **characterized in that** the transport block size being determined based on the number of resources in the subband full duplex time unit of the transmission resources and/or the number of resources in the non-subband full duplex time unit of the transmission resources, comprises:
based on configuration indicated by first configuration information or an indication of a first default value, the transport block size is determined according to the number of resources in the subband full duplex time unit of the transmission resources or the number of resources in the non-subband full duplex time unit of the transmission resources.

16. The method according to any one of claims 11 to 13, **characterized in that** the transport block size being determined based on the number of resources in the subband full duplex time unit of the transmission resources and/or the number of resources in the non-subband full duplex time unit of the transmission resources, comprises:
in response to a number of time units occupied by the subband full duplex time unit in the transmission resources being greater than a number of time units occupied by the non-subband full duplex time unit, the transport block size is determined based on the number of resources in the subband full duplex time units of the transmission resources; or
in response to a number of time units occupied by the non-subband full duplex time unit in the transmission resources being greater than a number of time units occupied by the subband full duplex time unit, the transport block size is determined based on the number of resources in the non-subband full duplex time unit of the transmission resources.

17. The method according to any one of claims 11 to 16, **characterized in that** the transmission resources are used for repetition, and the transport block size is applied to a transmission occasion corresponding to the subband full duplex time unit and a transmission occasion corresponding to the non-subband full duplex time unit.

18. The method according to any one of claims 11 to 16, **characterized in that** the transport block is transmitted on multiple slots; the transport block size being determined based on the number of resources in the subband full duplex time unit of the transmission resources and/or the number of resources in the non-subband full duplex time unit of the transmission resources, comprises:
the transport block size is determined based on the number of resources in the subband full duplex time unit of the transmission resources and first indication information, wherein the first indication information is carried by the resource scheduling information and is used to indicate a number of slots occupied by the transport block; or,
the transport block size is determined based on the number of resources in the non-subband full duplex time unit of the transmission resources and first indication information; or,
the transport block size is determined based on the number of resources in the subband full duplex time unit of the transmission resources and the number of resources in the non-subband full duplex time unit of the transmission resources.

19. A method for determining a transport block size, **characterized in that** the method comprises:
sending resource scheduling information, wherein the resource scheduling information is used to configure uplink or downlink transmission resources, and the transmission resources comprise a subband full duplex time unit in time domain; wherein the transport block size for uplink is determined based on a number of frequency domain resources of the uplink transmission resources that overlap with an uplink subband corresponding to the subband full duplex time unit, or the transport block size for downlink is determined based on a number of frequency domain resources of the downlink transmission resources that overlap with a downlink subband corresponding to the subband full duplex time unit.

20. The method according to claim 19, **characterized in that** the transport block size for downlink being determined based on the number of frequency domain resources of the downlink transmission resources that overlap with the downlink subband corresponding to the subband full duplex time unit, comprises:
the transport block size for downlink is determined based on a number of a portion of frequency domain resources of the downlink transmission resources that overlap with the downlink subband;
wherein the portion of frequency domain resources are determined based on second configuration information, predefined information, or a second default value.

21. A communication apparatus, **characterized in that** the communication apparatus comprises a unit for implementing the method according to any one of claims 1 to 8, or a unit for implementing the method according to claim 9 or 10, or a unit for implementing the method according to any one of claims 11 to 18, or a unit for implementing the method according to claim 19 or 20.

22. A communication apparatus, **characterized in that** the communication apparatus comprises a processor, a memory, and computer programs or instructions stored on the memory, **characterized in that** the processor executes the computer programs or instructions to implement steps of the method according to any one of claims 1 to 8, or to implement steps of the method according to claims 9 or 10, or to implement steps of the method according to any one of claims 11 to 18, or to implement steps of the method according to claims 19 or 20.

23. A chip comprising a processor, **characterized in that** the processor performs steps of the method according to any one of claims 1 to 8, or performs steps of the method according to claims 9 or 10, or performs steps of the method according to any one of claims 11 to 18, or performs steps of the method according to claims 19 or 20.

24. A chip module comprising a communication interface and a chip, **characterized in that** the chip comprises a processor, and the processor performs steps of the method according to any one of claims 1 to 8, or performs steps of the method according to claims 9 or 10, or performs steps of the method according to any one of claims 11 to 18, or performs steps of the method according to claims 19 or 20.

25. A computer-readable storage medium, **characterized in that** the computer-readable storage medium having computer programs or instructions stored thereon, wherein the computer programs or instructions, when being executed, implement steps of the method according to any one of claims 1 to 8, or implement steps of the method according to claims 9 or 10, or implement steps of the method according to any one of claims 11 to 18, or implement steps of the method according to claims 19 or 20.

26. A computer program product, **characterized in that** the computer program product comprises computer programs or instructions, wherein the computer programs or instructions, when being executed, implement steps of the method according to any one of claims 1 to 8, or implement steps of the method according to claims 9 or 10, or implement steps of the method according to any one of claims 11 to 18, or implement steps of the method according to claims 19 or 20.
